# EUROPEAN PATENT APPLICATION

(11) **EP 4 679 229 A1**
(43) Date of publication of application: **14.01.2026**
(21) Application number: 24826277.6
(22) Date of filing: 20.06.2024
(51) Int. Cl.: G06F 1/20, G06F 11/30, G05D 23/19, G06F 1/16, G06F 1/3287, H05K 1/18

(54) **ELECTRONIC DEVICE INCLUDING TEMPERATURE SENSOR AND TEMPERATURE CALCULATION METHOD THEREOF**

(30) Priority: 20.06.2023 KR 20230078894; 31.08.2023 KR 20230115601
(71) Applicant: Samsung Electronics Co., Ltd., Suwon-si, Gyeonggi-do 16677 (KR)
(72) Inventor: LEE, Jaebum, Suwon-si, Gyeonggi-do 16677 (KR); KANG, Hyunggwang, Suwon-si, Gyeonggi-do 16677 (KR); KIM, Youngho, Suwon-si, Gyeonggi-do 16677 (KR); LEE, Junho, Suwon-si, Gyeonggi-do 16677 (KR); JANG, Seokmin, Suwon-si, Gyeonggi-do 16677 (KR); HONG, Hyunju, Suwon-si, Gyeonggi-do 16677 (KR)
(74) Representative: Gulde & Partner
(86) International application number: PCT/KR2024/008547
(87) International publication number: WO 2024/262962

(57) **Abstract**

An electronic device according to various embodiments of the disclosure may include a first housing, a second housing configured to be slid into the first housing and slid out from the first housing, a substrate part disposed between the front surface and the rear surface in the first housing and including at least one heat source, a first temperature sensor disposed on the substrate part, a second temperature sensor disposed in the second housing, and at least one processor. The at least one processor is configured to calculate a temperature of the electronic device based on at least one of a measurement value of the first temperature sensor or a measurement value of the second temperature sensor. Various other embodiments may be possible.

## Description

### TEMPERATURE CALCULATION METHOD THEREOF

### [Technical Field]

Various embodiments of the disclosure relate to an electronic device including a temperature sensor and a method for calculating a temperature of an electronic device.

### [Background Art]

Electronic devices are gradually being developed to be slimmer and have increased rigidity, strengthened design aspects, and differentiated functional elements. Some electronic devices are gradually changing from having a uniform rectangular shape to more diverse shapes. Some electronic devices may have a changeable structure which may use a large screen display while securing convenient portability. For example, some electronic devices may have a structure (e.g., a rollable structure or a slidable structure) including a flexible display capable of varying a display area (e.g., a display area shown on the front of the electronic device) of the display through support of housings operable in a sliding manner with respect to each other.

In order to provide various functions to a user, an electronic device may include various active elements, such as, for example, an application processor (AP), a radio-frequency integrated circuit (RFIC), a power management IC (PMIC), and a multi-mode multi-band power amplifier (MMPA). The various active elements may consume power to operate. As the functions of the electronic device diversify and performance of the electronic device increases, the power consumed by the various active elements may also increase. A portion of the power consumed by the various active elements may be converted into heat and accordingly, the various active elements may be defined as heat sources of the electronic device.

The heat generated from the heat sources, that is, the active elements may increase the temperature of the electronic device. The increase of the temperature (e.g., a surface temperature) of the electronic device may cause sensations of heat and discomfort and/or thermal burns to a user of the electronic device. Techniques for reducing problems associated with temperature increases are desired which are capable of effectively measuring and calculating the temperature of the electronic device, and controlling the heat sources, that is, the various active elements based on the temperature.

### [Disclosure of the Invention]

### [Solution to Problem]

An electronic device may include a control device and/or control instructions provided to reduce a heat generation amount of a heat source when a temperature increases. However, in a case in which the electronic device calculates a temperature of the electronic device by using the same temperature sensor and the same method without sufficient consideration of a variable structure (e.g., a rollable structure or a slidable structure) despite changes in a state of the variable structure (e.g. a sliding movement of the slidable structure), there is a risk that the temperature of the electronic device may be under- or over-calculated. In a case in which the temperature of the electronic device is under-calculated, performance control for limiting the heat generation amount of the active elements which are heat sources may be inappropriately released and thus the temperature of the electronic device may be excessively increased. In a case in which the temperature of the electronic device is over-calculated, performance control for reducing the heat generation amount of the active elements which are heat sources may be excessively performed and thus the performance of the electronic device may be unnecessarily reduced.

Various embodiments of the disclosure may provide an electronic device which may calculate a temperature of the electronic device by considering a variable structure of the electronic device.

The electronic device according to various embodiments of the disclosure may include a memory configured to store executable instructions, at least one processor, a first housing, a second housing coupled to the first housing and relatively movable with respect to the first housing, a first temperature sensor disposed in the first housing, and a second temperature sensor disposed in the second housing.

The electronic device may be configured to, when the instructions are executed by the at least one processor, select at least one of the first temperature sensor or the second temperature sensor, based on a movement state of the second housing with respect to the first housing, and calculate a temperature of the electronic device based on measurement data (e.g., temperature data, measured temperature) provided by the selected temperature sensor.

In various embodiments, the electronic device may be configured to, when the instructions are executed by the at least one processor, calculate, when a movement state of the second housing is a first state in which a distance between a center of the first housing and a center of the second housing is a smallest distance, a temperature of the electronic device based on measurement data provided by the first temperature sensor. The electronic device may be configured to, when the instructions are executed by the at least one processor, calculate, when a movement state of the second housing is a second state in which the distance between the center of the first housing and the center of the second housing is a largest distance, a temperature of the electronic device based on measurement data provided by the second temperature sensor.

In various embodiments, the electronic device may, when the instructions are executed by the at least one processor, compare the calculated temperature of the electronic device with at least one predetermined reference value and control an operation of the at least one processor based on a result of the comparison.

In various embodiments, the electronic device may be configured to, when the instructions are executed by the at least one processor, calculate, when a movement state of the second housing is a third state in which the distance between the center of the first housing and the center of the second housing is greater than the distance in the first state and smaller than the distance in the second state, a temperature of the electronic device based on measurement data provided by the first temperature sensor and measurement data provided by the second temperature sensor.

In various embodiments, the electronic device may be configured to may be operatively connected to the at least one processor and may include a slide sensor configured to measure a relative movement distance between the first housing and the second housing. The electronic device may be configured to, when the instructions are executed by the at least one processor, calculate, in a case in which the relative movement distance between the first housing and the second housing measured by the slide sensor is equal to or less than a predetermined distance, a temperature of the electronic device based on a temperature value measured through the first temperature sensor and a temperature value measured through the second temperature sensor.

In various embodiments, the electronic device may be configured to, when the instructions are executed by the at least one processor, determine whether there is a movement of the second housing with respect to the first housing for a predetermined amount of time and calculate the temperature of the electronic device according to the relative movement distance between the first housing and the second housing after the predetermined amount of time has elapsed.

In various embodiments, the electronic device may be operatively connected to the at least one processor, the first temperature sensor, and the second temperature sensor, and may include a switching circuit configured to selectively connect each of the first temperature sensor and the second temperature sensor to the at least one processor. The electronic device may be configured to, when the instructions are executed by the at least one processor, control the switching circuit to connect a temperature sensor selected from the first temperature sensor and the second temperature sensor to the at least one processor through the switching circuit and calculate a temperature of the electronic device based on a temperature value measured by the selected temperature sensor.

In various embodiments, the electronic device may include a substrate part disposed in the first housing and having the at least one processor disposed on a surface of the substrate part. The first temperature sensor may be disposed on another surface of the substrate part such that the first temperature sensor at least partially overlaps the at least one processor, and the surface of the substrate part and the other surface of the substrate part may face each other.

In various embodiments, the second temperature sensor may be disposed at a position such that the second temperature sensor at least partially overlaps the at least one processor in the first state and is spaced apart from the at least one processor in the second state.

In various embodiments, the electronic device may be configured to, when the instructions are executed by the at least one processor, allocate a first weight to a measurement value of the first temperature sensor and a second weight to a measurement value of the second temperature sensor, configure the first weight and the second weight such that the first weight is smaller than the second weight in the first state, configure the first weight and the second weight such that the first weight is greater than the second weight in the second state, and calculate the temperature of the electronic device based on the first weight and the second weight.

In another embodiment, the electronic device may be configured to, when the instructions are executed by the at least one processor, calculate, in a case in which a drawn distance measured by the slide sensor is equal to or less than a predetermined distance, a temperature of the electronic device based on an average value of a temperature value measured through the first temperature sensor and a temperature value measured through the second temperature sensor.

In various embodiments, the electronic device may be configured to, when the instructions are executed by the at least one processor, update the calculated temperature based on a predetermined period and calculate the temperature of the electronic device based on determining a relative movement of the second housing with respect to the first housing is stopped for a period of time equal to or greater than the predetermined period.

In various embodiments, the electronic device may further include a display configured to display information, and the electronic device may be configured to, when the instructions are executed by the at least one processor, display, on the display, a temperature value measured through the first temperature sensor and the second temperature sensor and display, on the display, information of the selected temperature sensor from among the first temperature sensor and the second temperature sensor according to whether the electronic device is in the first state or the second state.

In various embodiments, at least one of the first temperature sensor or the second temperature sensor may include a thermistor.

In various embodiments, the electronic device may include a flexible printed circuit board positioned at the second housing and including a coil. The second temperature sensor may be disposed spaced a predetermined distance away from the coil on the flexible printed circuit board.

A method for controlling a temperature according to various embodiments of the disclosure is a method for controlling a temperature of an electronic device. The electronic device may include at least one processor, a first housing, a second housing movable with respect to the first housing, a first temperature sensor disposed in the first housing, and a second temperature sensor disposed in the second housing. The first housing and the second housing may be positioned in a first state in which a distance between a center of the first housing and a center of the second housing is a smallest value, a second state in which the distance between the center of the first housing and the center of the second housing is a largest value, or a third state in which the distance between the center of the first housing and the center of the second housing is greater than the distance in the first state and smaller than the distance in the second state. The method for controlling a temperature may include a housing movement state identification operation in which the at least one processor identifies a relative movement distance of the first housing with respect to the second housing, and a temperature calculation operation in which the at least one processor calculates, in a case in which the identified housing movement state corresponds to the first state, a temperature of the electronic device based on measurement data provided by the first temperature sensor and in a case in which the housing movement state corresponds to the second state, a temperature of the electronic device based on measurement data provided by the second temperature sensor.

In various embodiments, the temperature calculation operation may include an operation of configuring, in the first state, a first weight for the first temperature sensor and a second weight higher than the first weight for the second temperature sensor, and an operation of configuring, in the second state, a first weight for the first temperature sensor and a second weight lower than the first weight for the second temperature sensor.

In various embodiments, the electronic device may include a slide sensor configured to measure a relative movement distance of the second housing with respect to the first housing, the method for controlling a temperature may include a distance determination operation of determining whether the relative movement distance measured through the slide sensor in the third state is equal to or less than a predetermined distance, and the temperature calculation operation may include an operation of calculating, when the relative movement distance is equal to or less than a predetermined distance, a temperature of the electronic device based on a temperature value measured through the first temperature sensor and a temperature value measured through the second temperature sensor. In various embodiments, the method may include a standby operation in which the at least one processor determines whether a movement of the second housing with respect to the first housing is absent for a predetermined amount of time and performs the distance determination operation after the predetermined amount of time has elapsed and an operation of calculating the temperature depending on the relative movement distance between the first housing and the second housing identified based on the distance determination operation.

In various embodiments, the at least one processor may be configured to update the calculated temperature based on a predetermined period and the predetermined amount of time may be identical to the predetermined period.

In various embodiments, the electronic device may further include a display configured to display information, the temperature control operation may include an operation of displaying an interface on the display, and the interface may display temperature information measured through the first temperature sensor and temperature information measured through the second temperature sensor. The interface may display temperature information used to calculate the temperature of the method for controlling a temperature among the temperature information of the first temperature sensor and the temperature information of the second temperature sensor such that the temperature information is visually distinguished from other temperature information.

According to various embodiments of the disclosure, the first temperature sensor is disposed in the first housing which is inserted into the second housing or drawn out from the second housing, the second temperature sensor is disposed in the second housing, and the processor is configured to calculate a temperature by using at least one of the first temperature sensor or the second temperature sensor based on slide-in or slide-out of the first housing so as to provide the electronic device which calculates a temperature in consideration of the variable structure of the electronic device.

In addition, various effects directly or indirectly identified through the disclosure may be provided.

### [Brief Description of Drawings]

In connection with the description of the drawings, like or similar reference numerals may be used for like or similar elements.
FIG. 1 is a block diagram illustrating an electronic device in a network environment according to various embodiments of the disclosure.
FIGS. 2A and 2B are views illustrating a front surface and a rear surface of an electronic device in a slide-in state according to various embodiments of the disclosure.
FIGS. 3A and 3B are views illustrating a front surface and a rear surface of an electronic device in a slide-out state according to various embodiments of the disclosure.
FIG. 4 is an exploded perspective view of an electronic device according to various embodiments of the disclosure.
FIG. 5A is a planar view illustrating a state of an electronic device according to various embodiments.
FIG. 5B is a planar view illustrating a first state of an electronic device according to various embodiments.
FIG. 5C is a sectional view illustrating an electronic device according to various embodiments.
FIG. 5D is a planar view illustrating a printed circuit board of an electronic device according to various embodiments.
FIG. 6A is a block diagram illustrating an electronic device according to various embodiments.
FIG. 6B is a flowchart illustrating a temperature control operation of an electronic device according to various embodiments.
FIG. 7A is a block diagram illustrating an electronic device according to various embodiments.
FIG. 7B is a flowchart illustrating a temperature control operation of an electronic device according to various embodiments.
FIG. 7C is a flowchart illustrating a temperature control operation of an electronic device according to various embodiments.
FIG. 7D is a flowchart illustrating a temperature control operation of an electronic device according to various embodiments.
FIG. 8A is a planar view illustrating an electronic device according to various embodiments.
FIG. 8B is a flowchart illustrating a temperature control operation of an electronic device according to various embodiments.
FIG. 8C is a flowchart illustrating a temperature control operation of an electronic device according to various embodiments.
FIGS. 9A and 9B are planar views illustrating an electronic device according to various embodiments of the disclosure.

### [Mode for the Invention]

Hereinafter, various embodiments will be described with reference to the accompanying drawings.

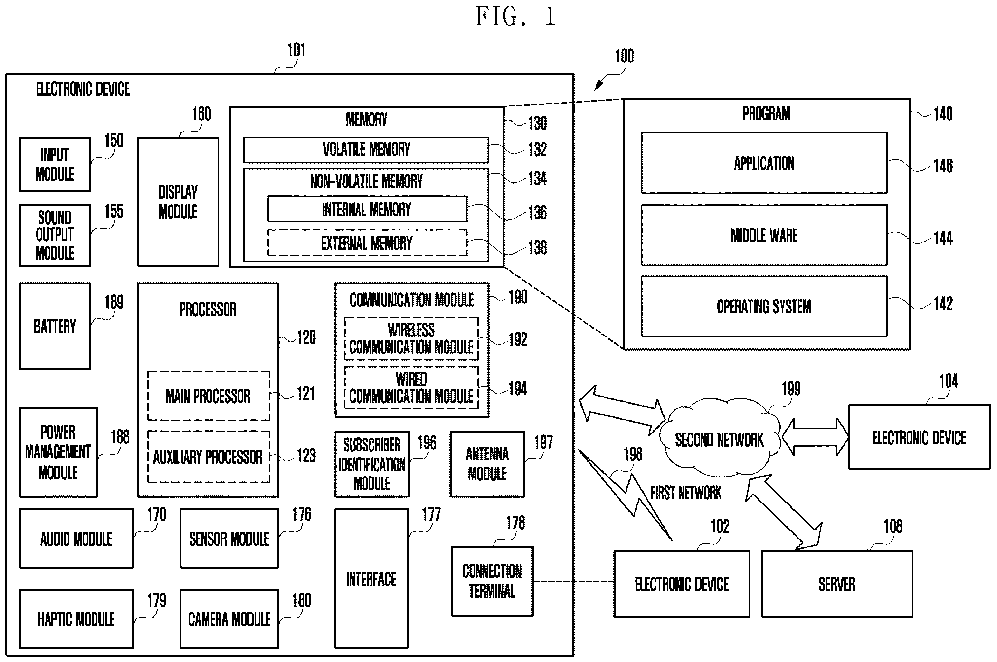

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input 1module 150, a sound output 1module 155, a display 1module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display 1module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input 1module 150 may receive a command or data to be used by another component (e.g., the processor 120) of the electronic device 101, from the outside (e.g., a user) of the electronic device 101. The input 1module 150 may include, for example, a microphone, a mouse, a keyboard, a key (e.g., a button), or a digital pen (e.g., a stylus pen).

The sound output 1module 155 may output sound signals to the outside of the electronic device 101. The sound output 1module 155 may include, for example, a speaker or a receiver. The speaker may be used for general purposes, such as, for example, playing multimedia or playing record. The receiver may be used for receiving incoming calls. According to an embodiment, the receiver may be implemented as separate from, or as part of the speaker.

The display 1module 160 may visually provide information to the outside (e.g., a user) of the electronic device 101. The display 1module 160 may include, for example, a display, a hologram device, or a projector and control circuitry to control a corresponding one of the display, hologram device, and projector. According to an embodiment, the display 1module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input 1module 150, or output the sound via the sound output 1module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as, for example, BluetoothTM, wireless-fidelity (Wi-Fi) direct, or infrared data association (IrDA)) or the second network 199 (e.g., a long-range communication network, such as, for example, a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as, for example, the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as, for example, the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as, for example, memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The terms "about" or "approximately" as used herein are inclusive of the stated value and include a suitable range of deviation for the particular value as determined by one of ordinary skill in the art, considering the measurement in question and the error associated with measurement of the particular quantity. The term "about" can mean within one or more standard deviations, or within ± 30%, 20%, 10%, 5% of the stated value, for example. The term "substantially," as used herein, means approximately or actually.

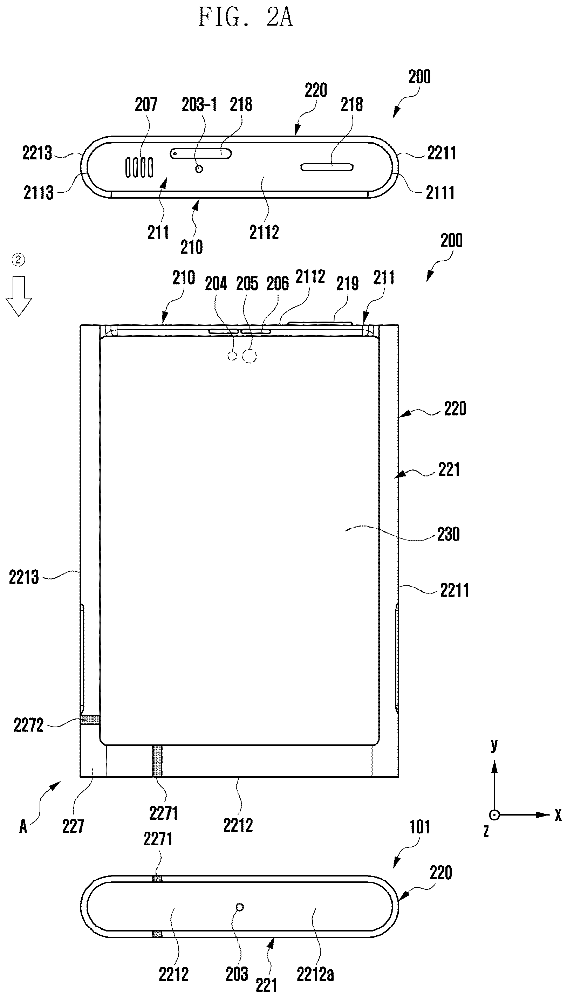

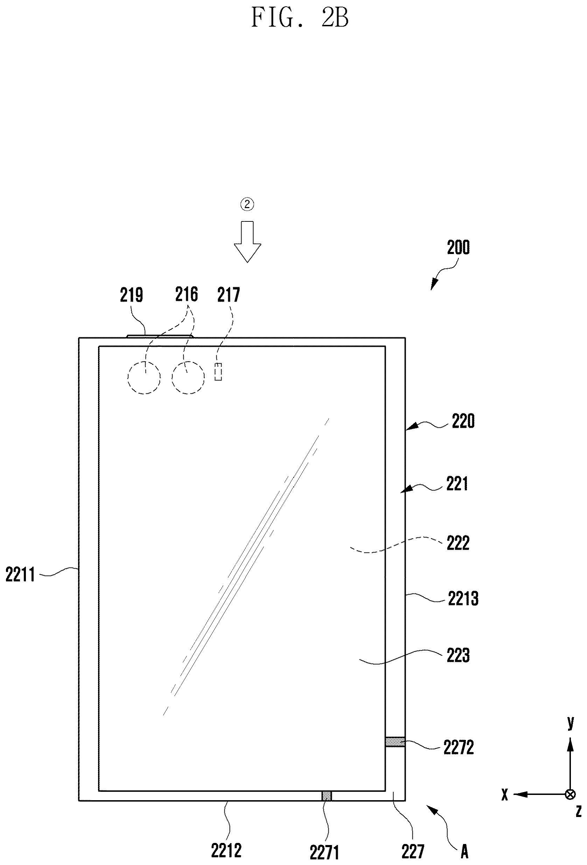

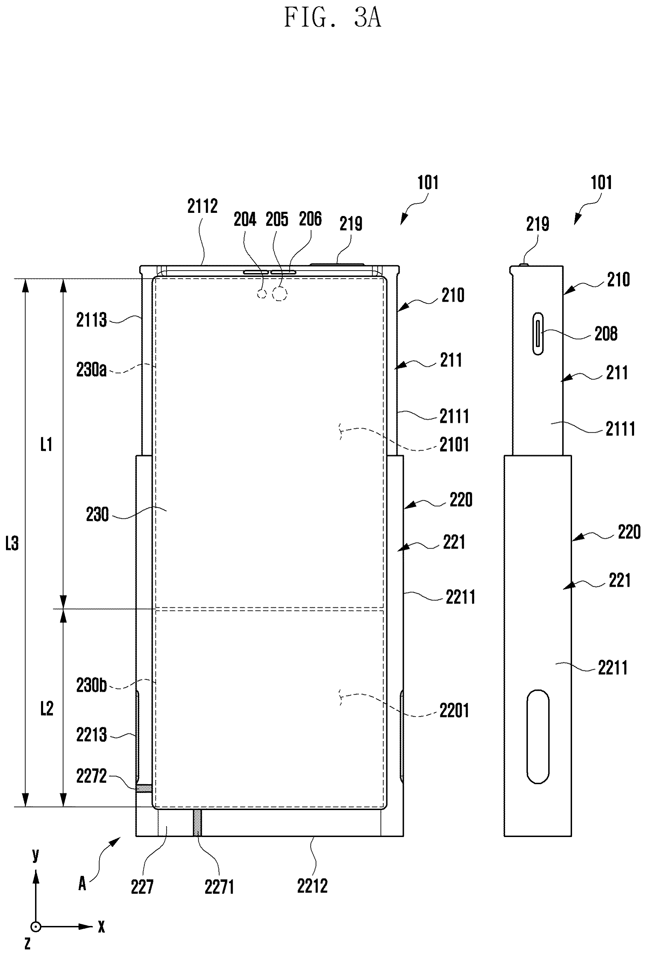

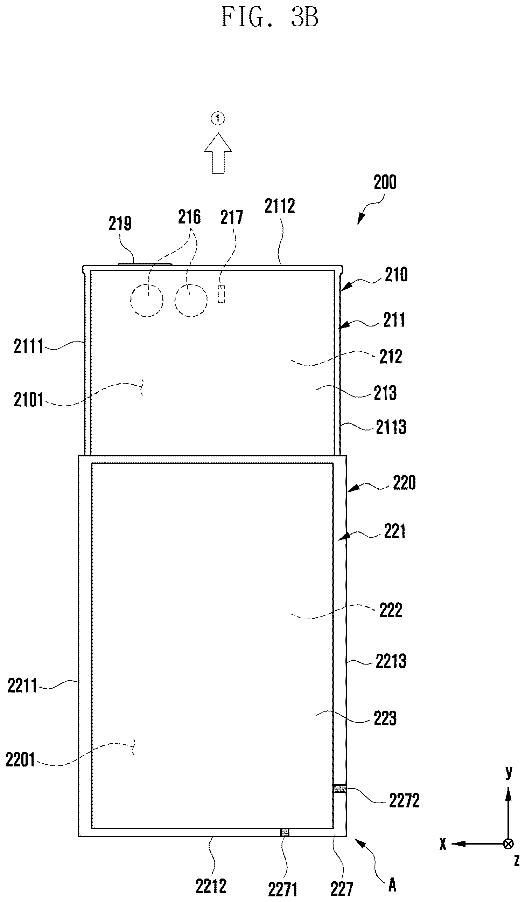

FIGS. 2A and 2B are views illustrating a front surface and a rear surface of an electronic device in a slide-in state according to various embodiments of the disclosure. FIGS. 3A and 3B are views illustrating a front surface and a rear surface of an electronic device in a slide-out state according to various embodiments of the disclosure.

The electronic device 200 In FIGS. 2A to 3B may be at least partially similar to the electronic device 101 in FIG. 1 or may further include another embodiment of the electronic device 101.

Referring to FIGS. 2A to 3B, the electronic device 200 may include a first housing 210 (e.g., a first housing structure, also referred to herein as a slide housing), a second housing 220 (e.g., a second housing structure, also referred to herein as a base housing) coupled to be slidable in a designated direction (e.g., direction ① or direction ②) (e.g., the y-axis direction) with respect to the first housing 210. The electronic device 200 may include a flexible display 230 (e.g., an expandable display or a stretchable display) disposed such that the flexible display 230 is supported by at least a portion of the first housing 210 and the second housing 220. In other embodiments, in the electronic device 200, the second housing 220 may be coupled to be slidable in a designated direction (e.g., direction ① or direction ②) (e.g., the y-axis direction) with respect to the first housing 210. For example, the first housing 210 and the second housing 220 may be configured to be coupled to each other and relatively movable with respect to each other.

According to embodiments, in an example in which the second housing 220 is held by a user, the first housing 210 of the electronic device 200 may be moveable in a first direction (direction ①) (e.g., slide-out) or in a second direction (direction ②) opposite to the first direction (direction ①) (e.g., slide-in). According to other embodiments, in an example in which the first housing 210 is held by the user, the second housing 220 of the electronic device 200 may be moveable in the first direction (direction ①) (slide-out) or in the second direction (direction ②) opposite to the first direction (direction ①) (e.g., slide-in). According to some embodiments, at least a portion of the first housing 210 including a first space 2101 may be receivable in a second space 2201 of the second housing 220 in association with changing the electronic device 200 (or the first housing 210) to the slide-in state.

The slide-in state may be referred to as a retracted state or a reduced state. The slide-out state may be referred to as an enlarged state or an extended state. Furthermore, the slide-in state may be referred to as a first state in which a distance between a center of the first housing and a center of the second housing is a smallest value, and the slide-out state may be referred to as a second state in which the distance between the center of the first housing and the center of the second housing is a largest value. The slide-in state may correspond to a case in which a display area of the display shown on the front of the electronic device 200 is the smallest, and the slide-out state may correspond to a case in which a display area of the display shown on the front of the electronic device 200 is the largest.

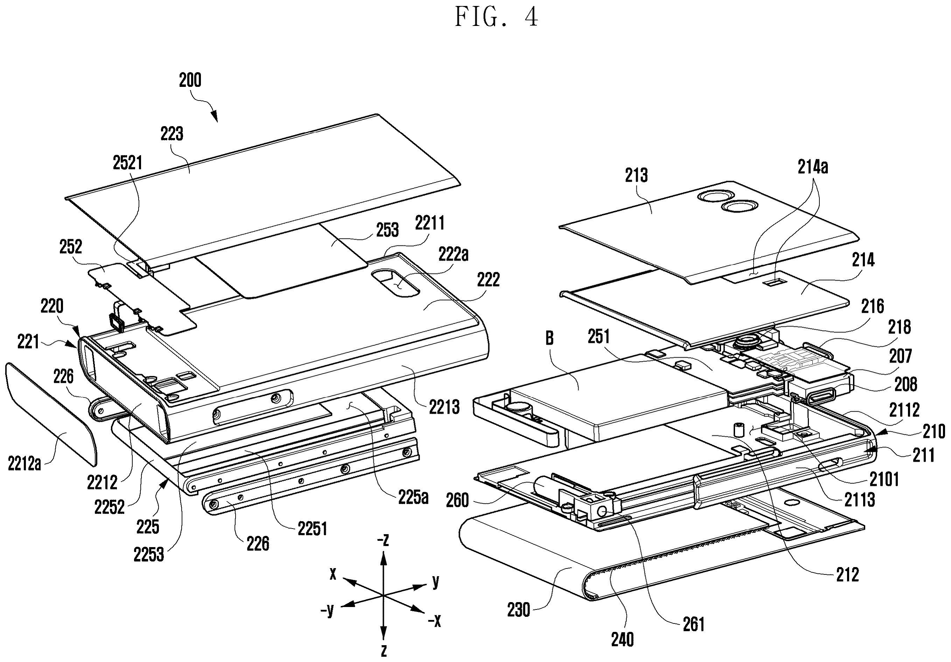

According to some embodiments, the electronic device 200 may include a bendable member (a bendable member or a bendable support member) (e.g., the bendable member 240 in FIG. 4) (e.g., a multi-joint hinge module or a multi-bar assembly) which may at least partially form the same plane with at least a portion of the first housing 210 in the slide-out state and may be at least partially received in the second space 2201 of the second housing 220 in the slide-in state. According to an embodiment, at least a portion of the flexible display 230 may be received in an internal space 2201 of the second housing 220 while being supported by the bendable member (e.g., the bendable member 240 in FIG. 4) to be disposed to be invisible from the outside. According to some embodiments, at least a portion of the flexible display 230 may be disposed to be visible from the outside while being supported by the bendable member (e.g., the bendable member 240 in FIG. 4) for at least partially forming the same plane with first housing 210.

According to various embodiments, the electronic device 200 may include the first housing 210 including a first lateral member 211 and the second housing 220 including a second lateral member 221. According to an embodiment, the first lateral member 211 may include a first lateral surface 2111 having a first length along a first direction (e.g., the y-axis direction), a second lateral surface 2112 extending to have a second length shorter than the first length along a substantially perpendicular direction (e.g., the x-axis direction) from the first surface 2111, and a third surface 2113 extending from the second lateral surface 2112 substantially parallel with the first lateral surface 2111 and having a third length along the first direction. In some aspects, the third length is equal to the first length. According to an embodiment, the first lateral member 211 may be at least partially formed of a conductive material (e.g., a metal). In some embodiments, the first lateral member 211 may be formed of a combination of a conductive material and a non-conductive material (e.g., polymer).

According to an embodiment, the first housing 210 may include a first support member 212 extending from at least a portion of the first lateral member 211 to at least a portion of the first space 2101. According to an embodiment, the first support member 212 may be integrally formed with the first lateral member 211. In some embodiments, the first support member 212 may be formed separately from the first lateral member 211 and structurally coupled to the first lateral member 211.

According to various embodiments, the second lateral member 221 may include a fourth lateral surface 2211 at least partially corresponding to the first lateral surface 2111 and having a third length, a fifth lateral surface 2212 extending in a direction substantially parallel with the second lateral surface 2112 from the fourth lateral surface 2211 and having a fourth length shorter than the third length, and a sixth lateral surface 2213 extending from the fifth lateral surface 2212 to correspond to the third lateral surface 2113 and having the third length. According to an embodiment, the second lateral member 221 may be at least partially formed of a conductive material (e.g., a metal). In some embodiments, the second lateral member 221 may be formed of a combination of a conductive material and a non-conductive material (e.g., polymer). According to an embodiment, at least a portion of the second lateral member 221 may include a second support member 222 extending to at least a portion of the second space 2201 of the second housing 220. According to an embodiment, the second support member 222 may be integrally formed with the second lateral member 221. In some embodiments, the second support member 222 may be formed separately from the second lateral member 221 and structurally coupled to the second lateral member 221.

According to various embodiments, the first lateral surface 2111 and the fourth lateral surface 2211 may be slidably coupled to each other. According to an embodiment, the third lateral surface 2113 and the sixth lateral surface 2213 may be slidably coupled to each other. According to an embodiment, in the slide-in state, the first lateral surface 2111 may overlap the fourth lateral surface 2211 to be disposed to be substantially invisible from the outside. According to an embodiment, in the slide-in state, the third lateral surface 2113 may overlap the sixth lateral surface 2213 to be disposed to be substantially invisible from the outside. In some embodiments, at least a portion of the first lateral surface 2111 and the third lateral surface 2113 may be disposed to be at least partially visible from the outside in the slide-in state. According to an embodiment, in the slide-in state, the first support member 212 may overlap the second support member 222 to be disposed to be substantially invisible from the outside. In some embodiments, in the slide-in state, a portion of the first support member 212 may overlap the second support member 222 to be disposed to be invisible from the outside and a remaining portion of the first support member 212 may be disposed to be visible from the outside.

According to various embodiments, the electronic device 200 may include a first rear cover 213 coupled to a rear surface of the first housing 210. According to an embodiment, the rear cover 213 may be disposed through at least a portion of the first support member 212. In some embodiments, the first rear cover 213 may be integrally formed with the first lateral member 211. According to an embodiment, the first rear cover 213 may be formed by coated or colored glass, ceramic, or a metal (e.g., aluminum, stainless steel (STS), or magnesium), or a combination of at least two thereof. In some embodiments, the first rear cover 213 may extend to at least a portion of the first lateral member 211. In some embodiments, at least a portion of the first support member 212 may be replaced with the first rear cover 213.

According to various embodiments, the electronic device 200 may include a second rear cover 223 coupled to the rear surface of the second housing 220. According to an embodiment, the second rear cover 223 may be disposed through at least a portion of the second support member 222. In some embodiments, the second rear cover 223 may be integrally formed with the second lateral member 221. According to an embodiment, the second rear cover 223 may be formed by coated or colored glass, ceramic, or a metal (e.g., aluminum, stainless steel (STS), or magnesium), or a combination of at least two thereof. In some embodiments, the second rear cover 223 may extend to at least a portion of the second lateral member 221. In some embodiments, at least a portion of the second support member 222 may be replaced with the second rear cover 223.

According to various embodiments, the electronic device 200 may include a flexible display 230 disposed such that the flexible display 230 is supported by at least a portion of the first housing 210 and the second housing 220. According to an embodiment, the flexible display 230 may include a first part 230a (e.g., a flat part) always visible from the outside and a second part 230b (e.g., a bendable part) extending from the first part 230a and at least partially received in the second space 2201 of the second housing 220 to allow at least a portion of the flexible display 230 to be invisible from the outside in the slide-in state. According to an embodiment, the first part 230a may be disposed such that the first part 230a is supported by the first housing 210 and the second part 230b may be disposed to be at least partially supported by a bendable member (e.g., the bendable member 240 in FIG. 4). According to an embodiment, in a state in which the first housing 210 is slid-out in the first direction (direction ①), the second part 230b of the flexible display 230 may be disposed such that the second part 230b extends from the first part 230a, is formed substantially on the same plane with the first part 230a, and is visible from the outside while being supported by the bendable member (e.g., the bendable member 240 in FIG. 4). According to an embodiment, in a state in which the second housing 220 is slid-in along the second direction (direction ②), the second part 230b of the flexible display 230 may be received in the second space 2201 of the second housing 220 and disposed such that the second part 230b is invisible from the outside. Accordingly, the electronic device 200 may have the flexible display 230 that has a display area variable according to the first housing 210 moving from the second housing 220 along a designated direction (e.g., the y-axis direction) in a sliding manner.

According to various embodiments, the flexible display 230 may have a length variable in the first direction (direction ①) according to a sliding movement of the first housing 210 moving based on the second housing 220. For example, the flexible display 230 may have a first display area (e.g., an area corresponding to the first part 230a) corresponding to a first length L1. According to an embodiment, the flexible display 230 may be extended to have a third display area (e.g., an area including the first part 230a and the second part 230b) larger than the first display area and corresponding to a third length L3 longer than the first length L1, according to a sliding movement of the first housing 210 which has additionally moved by a second length L2 based on the second housing 220 in the slide-in state.

According to various embodiments, the electronic device 200 may include at least one of an input device (e.g., a microphone 203-1), an audio output device (e.g., a call receiver 206 or a speaker 207), a sensor module 204 or 217, a camera module (e.g., a first camera module 205 or a second camera module 216), a connector port 208, a key input device 219, or an indicator (not shown) each of which is disposed in the first space 2101 of the first housing 210. According to an embodiment, the electronic device 200 may include another input device (e.g., a microphone 203) disposed in the second housing 220. In another embodiment, the electronic device 200 may omit at least one of the above-described components or additionally include other components. In another embodiment, at least one of the components described herein may be disposed in the second space 2201 of the second housing 220.

According to another embodiment, the input device may include the microphone 203-1. In an embodiment, the input device (e.g., the microphone 203-1) may include multiple microphones arranged so as to detect a direction of a sound. The sound output device may include, for example, the call receiver 206 and the speaker 207. According to an embodiment, the speaker 207 may be exposed to the outside through at least one speaker hole formed through the first housing 210. In some aspects, the at least one speaker hole may be disposed at a position (e.g., the second lateral surface 2112) such that the speaker 207 is always exposed the outside regardless of the slide-in/slide-out state of the electronic device 200. According to an embodiment, the connector port 208 may be exposed to the outside through at least one connector hole port formed through the first housing 210 in the slide-out state. In some embodiments, the connector port 208 may be exposed to the outside through an opening formed through the second housing and corresponding to the connector port hole in the slide-in state. In some embodiments, the call receiver 206 may include a speaker (e.g., a piezo speaker) operating without a separate speaker hole.

According to various embodiments, the sensor module 204 or 217 may generate an electrical signal or a data value corresponding to an internal operation state or external environment state of the electronic device 200. The sensor module 204 or 217 may include a first sensor module 204 (e.g., a proximity sensor or an illuminance sensor) disposed on the front surface of the electronic device 200 and/or a second sensor module 217 (e.g., a heart rate monitoring (HRM) sensor) disposed on the rear surface of the electronic device 200. According to an embodiment, the first sensor module 204 may be disposed under the flexible display 230 on the front surface of the electronic device 200. According to an embodiment, the first sensor module 204 and/or the second sensor module 217 may include at least one of a proximity sensor, an illumination sensor, a time of flight (TOF) sensor, an ultrasonic sensor, a fingerprint recognition sensor, a gesture sensor, a gyro sensor, an air pressure sensor, a magnetic sensor, an acceleration sensor, a grip sensor, a color sensor, an infrared (IR) sensor, a biometric sensor, a temperature sensor, or a humidity sensor.

According to various embodiments, the camera module may include a first camera module 205 disposed on the front surface of the electronic device 200 and a second camera module 216 disposed on the rear surface of the electronic device 200. According to an embodiment, the electronic device 200 may include a flash component (not shown) located adjacent to the second camera module 216. According to an embodiment, the camera modules 205 and 216 may include one or more of lenses, an image sensor, and/or an image signal processor. According to an embodiment, the first camera module 205 may be disposed under the flexible display 230 and configured to capture an image of a subject through a portion of an activation area (e.g., a display area) of the flexible display 230.

According to various embodiments, the first camera module 205 of the camera modules and a certain sensor module 204 of the sensor modules 204 and 217 may be disposed to detect an external environment through the flexible display 230. For example, the first camera module 205 or the certain sensor module 204 may be disposed in the first space 2201 of the first housing 210 to be contact with the external environment through a transmission area or a perforated opening formed on the flexible display 230. According to an embodiment, an area facing the first camera module 205 of the flexible display 230 may be a portion of an area configured to display content, and may be formed to be a transmission area having predetermined transmittance. According to an embodiment, the transmission area may be configured to have transmittance in a range of about 5 % to about 20%.

Such a transmission area may include an area overlapping an effective area (e.g., a view-angle region) of the first camera module 205 through which light for imaging to an image sensor to generate an image may pass. For example, the transmission area of the flexible display 230 may include an area having a lower pixel arrangement density and/or wire density than a peripheral area. For example, the transmission area may be substituted with the opening described herein. For example, a certain camera module 205 may include an under-display camera (UDC). In some embodiments, a certain sensor module 204 may be disposed in the internal space of the electronic device 200 to perform functions of the electronic device 200 without being visually exposed through the flexible display 230.

According to various embodiments, the electronic device 200 may include at least one antenna (e.g., the antenna module 197 in FIG. 1) electrically connected to a wireless communication circuit (e.g., the wireless communication circuit 192 in FIG. 1) disposed in the second housing 210. According to an embodiment, the electronic device 200 may include a bezel antenna A disposed through the conductive second lateral member 221 of the second housing 210. For example, the bezel antenna A may be disposed on at least a portion of the fifth lateral surface 2212 and a portion of the sixth lateral surface 2213 of the second lateral member 221, and the bezel antenna A may include a conductive part 227 that is electrically segmented through at least one segment part 2271 or 2272 formed of a non-conductive material (e.g., polymer). According to an embodiment, a wireless communication circuit (e.g., the wireless communication module 192 in FIG. 1) may be configured to transmit or receive a wireless signal in at least one frequency band (e.g., about 800 MHz to 6000 MHz) (e.g., a legacy band) designated through the conductive part 227.

According to an embodiment, the electronic device 200 may include a lateral cover 2212a disposed in the fifth lateral surface 2212 such that the lateral cover 2212a covers at least a portion of the at least one segment part 2271. In some embodiments, the bezel antenna A may be disposed on at least one of the second lateral surface 2112, the fourth lateral surface 2211, the fifth lateral surface 2212, and the sixth lateral surface 2213. In some embodiments, the electronic device 200 may further include at least one antenna module (e.g., a 5G antenna module or antenna assembly) disposed in the internal space (e.g., the first space 2101 or the second space 2201) and disposed to transmit or receive a wireless signal in a frequency band ranging from about 3 GHz to 100 GHz through another wireless communication circuit (e.g., the wireless communication module 192 in FIG. 1).

According to various embodiments, a slide-in/slide-out operation of the electronic device 200 may be performed by supplying a driving signal to a driving module (e.g., a driving motor) under a configured condition (e.g., a configured movement direction and/or a configured movement distance). For example, the slide-in/slide-out operation of the electronic device 200 may be performed through a gearing operation of a rack gear (e.g., the rack gear 2251 in FIG. 4) disposed in the second space 2201 of the second housing 220 and meshed with a pinion gear 261 and a driving motor (e.g., the driving motor 260 in FIG. 4) including the pinion gear 261 disposed in the first space 2101 of the first housing 210. For example, in response to detecting a triggering operation for switching from the slide-in state to the slide-out state or from the slide-out state to the slide-in state, the processor (e.g., the processor 120 in FIG. 1) of the electronic device 200 may operate the driving motor (e.g., the driving motor 260 in FIG. 4) disposed inside the electronic device 200. According to an embodiment, the triggering operation may include selecting (e.g., touching) an object displayed on the flexible display 230 or operating a physical button (e.g., a key button) included in the electronic device 200.

FIG. 4 is an exploded perspective view of an electronic device according to various embodiments of the disclosure.

In describing the electronic device 200 of FIG. 4, components that are substantially the same as those of the electronic device 200 of FIGS. 2A to 3B are given the same reference numerals, and detailed descriptions thereof may be omitted.

Referring to FIG. 4, the electronic device 200 may include a first housing 210 including a first space 2101, a second housing 220 slidably coupled to the first housing 210 and including a second space (e.g., the second space 2201 in FIG. 3A), a bendable member 240 disposed in the second space 2201 and at least partially rotatable, a flexible display 230 disposed such that the flexible display 230 is supported by at least a portion of the bendable member 240 and the first housing 210, and a driving module configured to drive the first housing in a direction (e.g., the -y-axis direction) in which the first housing 210 is slid into the second housing 220 and/or a direction (e.g., the y-axis direction) in which the first housing 210 is slid out from the second housing 220. According to an embodiment, the driving module may include a driving motor 260 disposed in the first space 2101. The driving motor 260 may include a pinion gear 261 and the driving module may include a rack gear 2251 disposed to be meshed with the pinion gear 261 in the second space 2201. According to an embodiment, the driving module may further include a reduction module disposed to be coupled to the driving motor 260 configured to reduce a rotation speed and increase driving force. According to an embodiment, the driving motor 260 may be disposed such that the driving motor 260 is supported by at least a portion of the first support member 212 in the first space 2101 of the first housing 210. According to an embodiment, the driving motor 260 may be fixed to an end part (e.g., an edge) of the first support member 212 in the slide-in direction (e.g., the -y-axis direction) in the first space 2101.

According to various embodiments, the electronic device 200 may include multiple electronic components disposed in the first space 2101. According to an embodiment, the multiple electronic components may include a first substrate 251 (e.g., a main substrate), a camera module 216 disposed around the first substrate 251, a socket module 218 (e.g., a SIM tray), a speaker 207, a connector port 208, and a battery B. According to an embodiment, the multiple electronic components are disposed together with the driving motor 260 around the first substrate 251 in the first space 2101 of the first housing 210 and thus may allow effective electrical connection.

According to various embodiments, the electronic device 200 may include a rear bracket 214 disposed such that the rear bracket 214 covers at least a portion of the multiple electronic components between the first support member 212 of the first housing 210 and the first rear cover 213. According to an embodiment, the rear bracket 214 may be structurally coupled to at least a portion of the first support member 212. In some embodiments, the rear bracket 214 may be omitted. According to an embodiment, the rear bracket 214 may be disposed such that the rear bracket 214 covers multiple electronic components and supports the first rear cover 213. According to an embodiment, the rear bracket 214 may include a notch area 214a or an opening 214a (e.g., a through-hole) configured on an area corresponding to the camera module 216 and/or a second module (e.g., the sensor module 217 in FIG. 3B). According to an embodiment, the camera module 216 and/or the sensor module 217 may be disposed to detect the external environment through the notch area 214a or the opening 214a. According to an embodiment, the first rear cover 213 may include a transparent area corresponding at least to the camera module 216 and/or the sensor module 217. In some embodiments, the camera module 216 and/or the sensor module 217 may be configured to operate when the electronic device 200 is in the slide-out state. In some embodiments, the camera module 216 and/or the sensor module 217 may be configured not to operate when the electronic device 200 is in the slide-in state.

According to various embodiments, the electronic device 200 may include a support bracket 225 (e.g., a display support bar (DSB)) disposed in the second space 2201 of the second housing 220 and slidably coupled to at least a portion of the first support member 212. According to an embodiment, the support bracket 225 may include an opening 225a having a designated size. According to an embodiment, the support bracket 225 may include a support part 2252 disposed at one end of the support bracket 225 and including an external surface formed to be curved, such that the support bracket 225 may support the rear surface of the bendable member 240 which is bent during a sliding operation. According to an embodiment, the support bracket 225 may include a support plate 2253 configured to extend from at least a portion of the support part 2252 to at least a portion of the opening 225a, such that the support bracket 225 may support the rear surface of the bendable member 240 in the slide-out state. According to an embodiment, the support bracket 225 may include a rack gear 2251 passing through the opening 225a and fixed to have a length along a direction parallel with the sliding direction. In some embodiments, the rack gear 2251 may be integrally formed with the support bracket 225. According to an embodiment, the electronic device 200 may include a pair of guide rails 226 disposed at both lateral surfaces of the support bracket 225 and configured to guide both end portions of the bendable member 240 in the sliding direction.

According to various embodiments, the second housing 220 may include an opening 222a (e.g., a through-hole) through the second support member 222 at an area corresponding to the camera module 216 and/or the sensor module 217 disposed in the first housing 210 when the electronic device 200 is in the slide-in state. According to an embodiment, the camera module 216 and/or the sensor module 217 may detect the external environment through the opening 222a formed on the second housing 220 when the electronic device 200 is in the slide-in state. In this case, the second rear cover 223 may include a transparent area corresponding at least to the camera module 216 and/or the sensor module 217.

According to various embodiments, the electronic device 200 may include a second substrate 252 and an antenna member 253 disposed in a space between the second support member 222 and the second rear cover 223 of the second housing 220. According to an embodiment, the second substrate 252 and the antenna member 253 may be electrically connected to the first substrate 251 through at least one electrical connection member (e.g., a flexible printed circuit board (FPCB) or a flexible RF cable (FRC)). In some embodiments, the antenna member 253 may be electrically connected to the second substrate 252. The antenna member 253 may be electrically connected to the first substrate 251 through the second substrate 252.

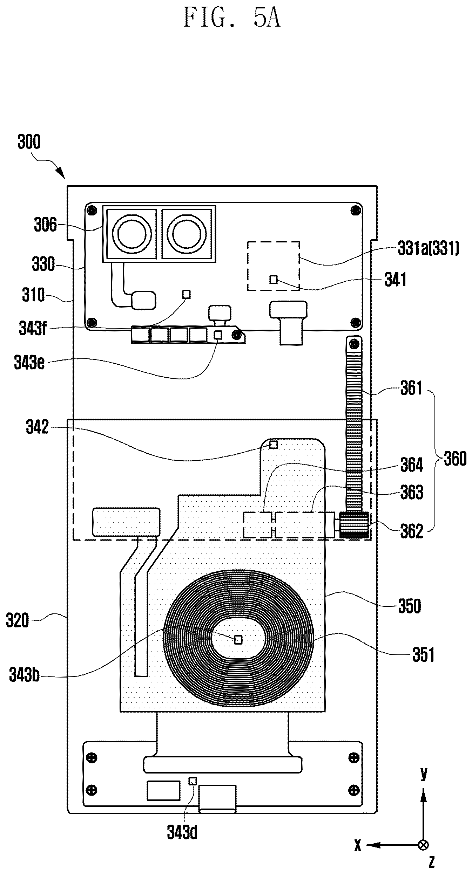

FIG. 5A is a planar view illustrating a state of an electronic device 300 according to various embodiments.

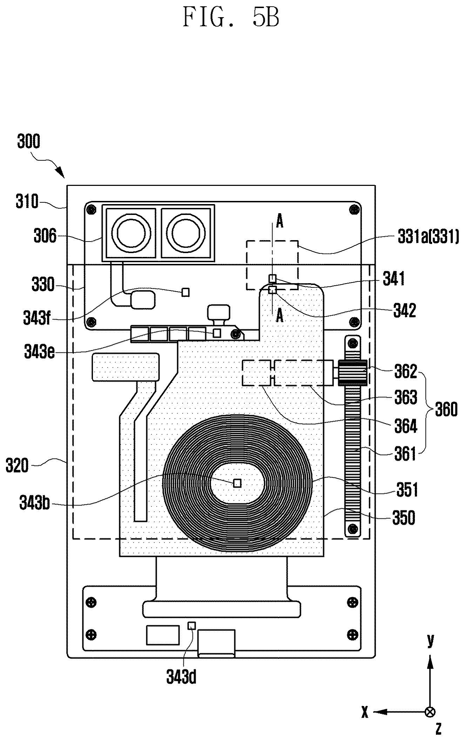

FIG. 5B is a planar view illustrating a first state of an electronic device 300 according to various embodiments.

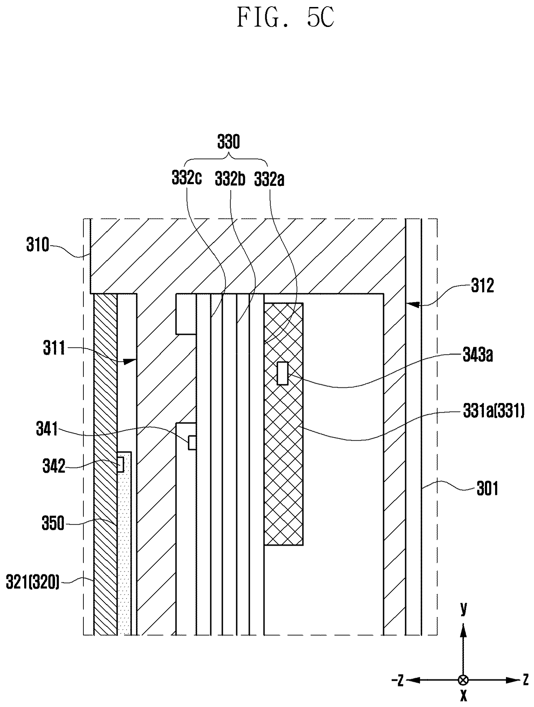

FIG. 5C is a cross sectional view illustrating an electronic device 300 according to various embodiments.

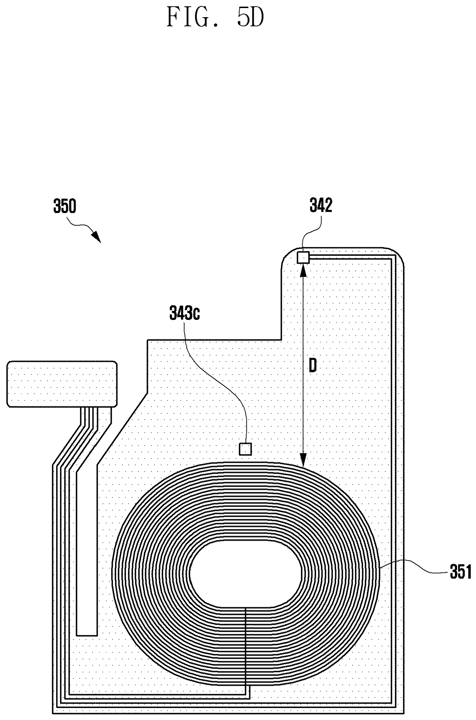

FIG. 5D is a planar view illustrating a printed circuit board 350 of an electronic device 300 according to various embodiments.

In FIGS. 5A and 5B, a rear cover (e.g., a member such as, for example, the first rear cover 213 and the second rear cover 223 in FIG. 4) of the electronic device 300 is omitted for clarity.

The cross sectional view in FIG. 5C is a cross section taken in the A-A direction of FIG. 5B.

Referring to FIGS. 5A to 5C, the electronic device 300 (e.g., the electronic device 101 in FIG. 1 or the electronic device 200 in FIGS. 2A to 4) may include a first housing 310 (e.g., the first housing 210 in FIGS. 2A to 4), a second housing 320 (e.g., the second housing 320 or 220 in FIGS. 2A to 4), and a substrate part 330 (e.g., the first substrate 251 in FIG. 4). The electronic device 300 may include aspects of electronic device 101 and electronic device 200 described herein, and repeated descriptions of like elements are omitted for brevity.

The first housing 310 may be a portion for providing a space in which at least a portion of components of the electronic device 300, such as, for example, the substrate part 330 is disposed. In the first housing 310, a front surface 312 (e.g., a surface facing the z direction in the drawing) and a rear surface 311 (e.g., a surface facing the -z direction in the drawing) may be defined and the components, such as, for example, the substrate part 330, may be disposed in a space between the front surface 312 and the rear surface 311. In various embodiments, a portion of a display 301 (e.g., the display module 160 in FIG. 1 or the flexible display 230 in FIG. 4) may be disposed on the front surface 312 of the first housing 310.

The second housing 320 may be a housing relatively movable with respect to the first housing 310. For example, the second housing 320 may be a housing having an internal space into which or out of which the first housing 310 may slide. The second housing 320 may be configured to receive some components of the electronic device 300 disposed therein and cover at least a portion of a lateral side (e.g., the x-axis direction in the drawing) and a rear side (e.g., the -z direction in the drawing) of the first housing 310. In various embodiments, the electronic device 300 may be in a first state, a second state, a third state, and/or another state depending on a relative movement of the second housing 320 with respect to the first housing 310.

The first state may correspond to a state in which a distance between a center of the first housing 310 and a center of the second housing 320 is the smallest distance supported by the sliding of the electronic device 300 (e.g., a state in which the first housing 310 is maximally slid in with respect to the second housing 320 (the state shown in FIG. 5B)). The second state may correspond to a state in which the distance between the center of the first housing 310 and the center of the second housing 320 is the largest distance supported by the sliding of the electronic device 300 (e.g., a state in which the first housing 310 is maximally slid out from the second housing 320 (the state shown in FIG. 5A)). The third state may correspond to an intermediate state between the first state and the second state (e.g., a state in which the first housing 310 is positioned between the maximally slide-in state and the maximally slide-out state with respect to the second housing 320). The electronic device 300 may operate in the first state, the second state, and various states between the first state and the second state.

The electronic device 300 may include various electrical components, such as, for example, at least one processor (e.g., an application processor (AP) 331a and a temperature control processor 340) disposed on the substrate part 330, and the substrate part 330 may be a portion in which various electrical components, such as, for example, a camera module 306, are electrically connected to each other. In various embodiments, the substrate part 330 may include at least one printed circuit board layer (e.g., one or more of printed board layers 332a, 332b, or 332c).

In various embodiments, the substrate part 330 may include a heat source 331. The heat source 331 may include an electrical component, such as, for example, the at least one processor (e.g., the application processor (AP) 331a, a graphics processing unit (GPU), and or a power management IC (PMIC)), which may consume power and generate heat. In various embodiments, the electronic device 300 may include a temperature control processor 340 configured to manage temperature (e.g., limit temperature rise) of the electronic device 300 and optimize operating performance of the heat source 331.

In various embodiments, the electronic device 300 may include a first temperature sensor 341 and a second temperature sensor 342. The first temperature sensor 341 and the second temperature sensor 342 each may be a portion configured to measure a temperature value for calculating or predicting a temperature (e.g., a surface temperature of the electronic device 300, which the user may feel when using or handling the electronic device 300) of the electronic device 300. The first temperature sensor 341 and the second temperature sensor 342 may include an electrical element, such as, for example, a thermistor, a thermocouple, and/or a resistance temperature detector (RTD), which has an electrical characteristic changing depending on temperature.

The first temperature sensor 341 may be disposed on at least a portion of the first housing 310, and the second temperature sensor 342 may be disposed on at least a portion of the second housing 320. In various embodiments, the first temperature sensor 341 may be disposed to be adjacent to an inner surface of the first housing 310. For example, the first temperature sensor 341 may be disposed on a surface of the substrate part 330 adjacent to the inner surface of the first housing 310. The second temperature sensor 342 may be disposed to be close to (e.g., within a threshold distance of) an inner surface of the second housing 320. For example, the second temperature sensor 342 may be disposed adjacent to an inner surface of a second rear cover (e.g., the second rear cover 223 in FIG. 4) to be coupled to the second housing 320.

In various embodiments, the first temperature sensor 341 may be disposed on a portion overlapping the heat source 331 (e.g., the AP 331a) based on a thickness direction (e.g., the z-axis direction in the drawing). The surface temperature of the housing of the electronic device 300 may be distributed such that a high temperature (e.g., a temperature exceeding a threshold value) is concentrated in an area overlapping the heat source 331. In order to effectively calculate or predict the heat felt by the user when using the electronic device 300, temperature sensors(e.g. first temperature sensor 341 and/or second temperature sensor) may be disposed in an area overlapping the heat source 331. In various embodiments, the second temperature sensor 342 may be disposed on a portion overlapping the heat source 331 based on a thickness direction (e.g., the y direction) in a state in which the first housing 310 is slid in the second housing 320. As described herein, the electronic device 300 may use a measurement data provided by the second temperature sensor 342 to calculate a temperature of the electronic device 300 in a state in which the first housing 310 is slid into the second housing 320, and thus the second temperature sensor 342 may be disposed to be overlapped with the heat source 331 in the slide-in state of the electronic device 300.

In various embodiments, the first temperature sensor 341 may be disposed on the substrate part 330. The first temperature sensor 341 may be disposed on an area of the substrate part 330 overlapping the heat source 331 when viewed in the front direction (e.g., the z direction in the drawing).

The electronic device 300 may further include various temperature sensors in addition to the first temperature sensor 341 and the second temperature sensor 342. For example, the electronic device 300 may include various temperature sensors, such as, for example, an application processor (AP) temperature sensor 343a configured to detect a temperature of the AP 331a, a battery temperature sensor 343b, a wireless charging module temperature sensor 343c, an USB port temperature sensor 343d, a wireless communication module temperature sensor (e.g., Wi-Fi communication module temperature sensor) and/or a power amplifier temperature sensor 343f. Each of the various temperature sensors 343a, 343b, 343c, 343d, 343e, and 343f described herein may be disposed inside a component (e.g., the AP, a battery, a wireless charging module, an UBS port, a wireless communication module, and/or a power amplifier) that is the object of temperature measurement by the respective temperature sensor or may be disposed adjacent to the component. The various temperature sensors described herein may be directly or indirectly connected to at least one processor (e.g., AP 331a, or the temperature control processor 340) of the electronic device 300.

Referring to FIG. 5D, in various embodiments, the electronic device 300 may include a flexible printed circuit board 350. The flexible printed circuit board 350 may be a member having a circuit configured thereon such that various electrical components are disposed and connected to the substrate part 330 and/or another electrical component. In various embodiments, the flexible printed circuit board 350 may include a coil 351. The coil 351 may include an antenna for near field communication, such as, for example, near field communication (NFC), and/or a wireless charging inductive coil. The flexible printed circuit board 350 may be positioned on a rear (e.g., the -z direction in the drawing) inner surface (e.g., a surface in an inner direction of the rear cover 321) of the second housing 320 for performance improvement of the near field communication or wireless charging described herein.

In various embodiments, the second temperature sensor 342 may be disposed on the flexible printed circuit board 350. As the second temperature sensor 342 is disposed on the flexible printed circuit board 350, and the flexible printed circuit board 350 is positioned on the rear inner surface of the second housing 320, temperature data (e.g., measured temperature) provided by the second temperature sensor 342 may more directly reflect the temperature felt by the user at the second housing 320. In various embodiments, the second temperature sensor 342 may be disposed such that the second temperature sensor 342 is spaced a predetermined distance away from the coil 351 (e.g., the near field communication antenna and/or wireless charging inductive coil described herein) disposed on the flexible printed circuit board 350. The coil 351 generates heat during an operation, affecting the measurement value of the second temperature sensor 342 and thus the second temperature sensor 342 may be spaced from the coil 351 to prevent the second temperature sensor 342 from being affected thereby. In some aspects, the temperature rise due to the heat generation of the coil 351 may be measured by a separate temperature sensor (e.g., the wireless charging module temperature sensor 343c) disposed adjacent to the coil 351, and an effect of the heat generation of the coil 351 on a thermal sensation felt by the user may be additionally considered when calculating the temperature of the temperature control processor 340, which will be described later.

Referring to FIGS. 5A and 5B again, in various embodiments, the electronic device 300 may include a sliding drive device 360. The sliding drive device 360 may be a device configured to drive a mutual sliding movement of the first housing 310 and the second housing 320. For example, the sliding drive device 360 may include components such as, for example, a rack 361 disposed in the first housing 310, a pinion gear 362 disposed in the second housing 320, and a motor 363 for driving same. In another embodiment, the sliding drive device 360 may be disposed in the second housing 320. FIGS. 5A and 5B illustrate the sliding drive device 360 having a rack-and-pinion mechanism, but the disclosure is not limited thereto, and the sliding drive device 360 may include various linear drive devices supportive of sliding of the sliding drive device 360 such as, for example, a linear motor, a hydraulic or pneumatic actuator, a jack screw, and/or a ball screw. In various embodiments, the sliding drive device 360 may be controlled by at least one processor (e.g., the AP 331a or the processor 120 in FIG. 1) and perform switching of the electronic device 300 between different sliding states (e.g., the first to third states).

In various embodiments, the electronic device 300 may include a slide sensor 364. For example, the sliding drive device 360 may include the slide sensor 364. The slide sensor 364 may be a sensor configured to detect a movement state (e.g., the first state, the second state, or the third state) of the first housing 310 with respect to the second housing 320. The slide sensor 364 may include a mechanical switch, a Hall sensor, an electromagnetic inductive sensor, or a photodiode, but is not limited thereto.

In various embodiments, the slide sensor 364 may be a sensor configured to detect a state (also referred to herein as a movement state) (e.g., the first state, the second state, or the third state) of the first housing 310 with respect to the second housing 320 and measure a relative movement distance of the second housing 320 with respect to the first housing 310. The slide sensor 364 configured to measure a relative movement distance may include various position sensors, such as, for example, a capacitive displacement sensor, a potentiometer, a piezoelectric transducer, and/or position encoders (e.g., a mechanical encoder, an optical encoder, a magnetic encoder, and/or an electromagnetic encoder). The slide sensor 364 may provide, to the temperature control processor 340, information on the relative movement distance of the second housing 320 with respect to the first housing 310 such that the temperature control processor 340 may adaptively calculate a temperature based on a degree to which the first housing 310 and the second housing 320 are slid in or slid out. A detailed operation of the temperature control processor 340 linked with the slide sensor 364 will be described herein.

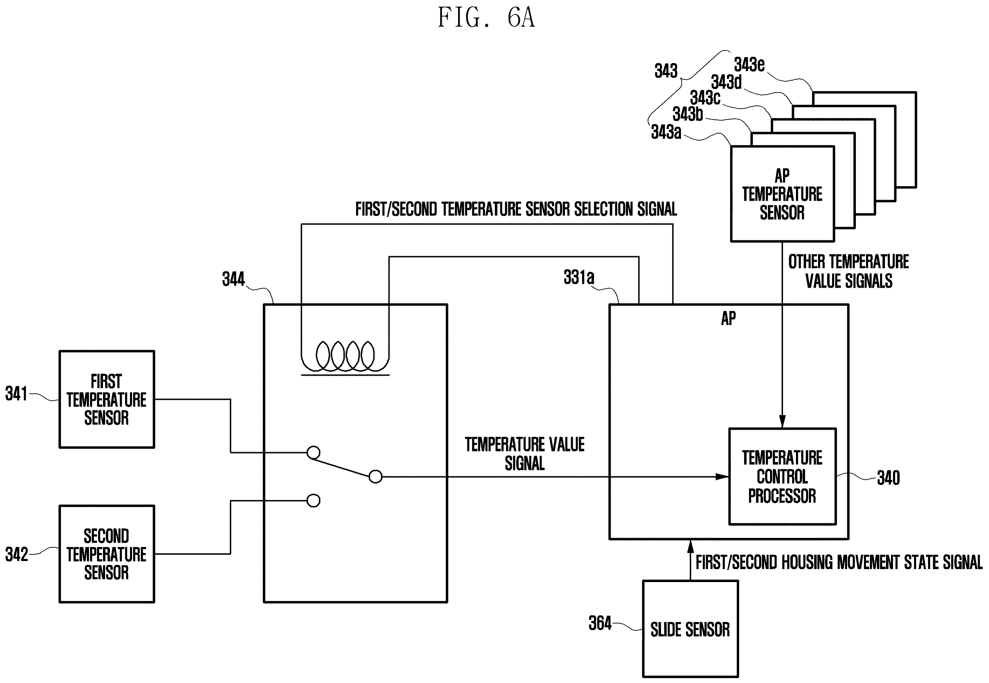

FIG. 6A is a block diagram illustrating an electronic device 300 according to various embodiments.

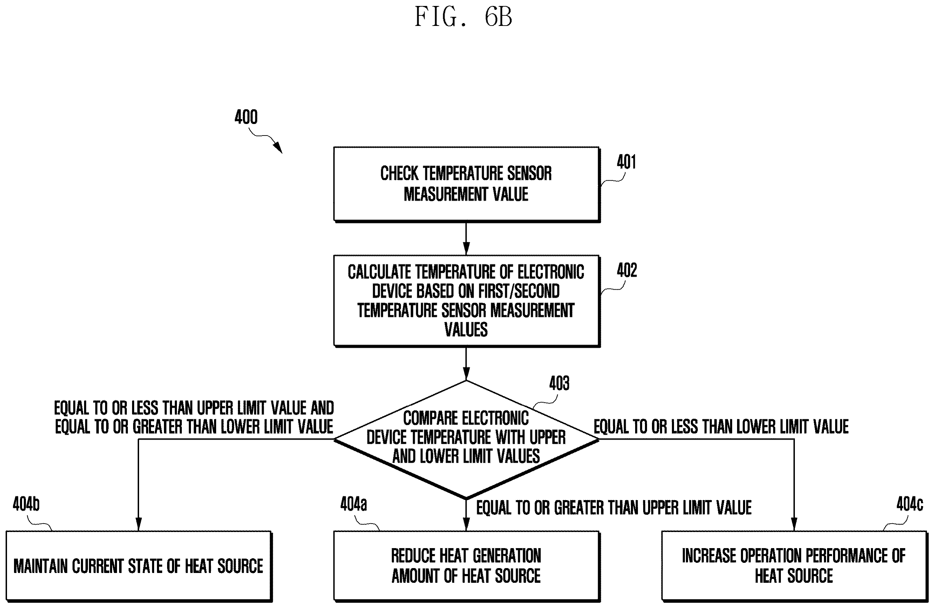

FIG. 6B is a flowchart illustrating a temperature control operation 400 (also referred to herein as a temperature control process flow) of an electronic device 300 according to various embodiments.

Referring to FIGS. 6A and 6B, the electronic device 300 may include the temperature control processor 340. The temperature control processor 340 may be a processor configured to calculate and/or predict a temperature (e.g., a surface temperature of the electronic device 300 and/or a temperature felt by the user of the electronic device 300 when using the electronic device 300) of the electronic device 300 based on a temperature value measured by various temperature sensors. In various embodiments, the temperature control processor 340 may include a physically implemented independent integrated circuit (e.g., ASIC). In various embodiments, the temperature control processor 340 may include an operation unit and/or a control circuit as a portion of the processor (e.g., the AP 331a and/or the processor 120 in FIG. 1) of the electronic device 300. In various embodiments, the temperature control processor 340 may be implemented as software, a subroutine, a process, or a thread executed in the processor (e.g., the AP 331a and/or the processor 120 in FIG. 1). In various embodiments, the temperature control processor 340 may include executable instructions stored in a memory (e.g., the memory 130 in FIG. 1) and executed by the processor (e.g., the AP 331a and/or the processor 120 in FIG. 1). That is, the temperature control processor 340 may be identical or substantially identical to the processor (e.g., the AP 331a and/or the processor 120 in FIG. 1), and repeated distinguishing descriptions of the temperature control processor 340 are omitted for brevity.

In various embodiments, the electronic device 300 may include a switching circuit 344. The switching circuit 344 may include a circuit configured to apply (e.g., based on a switching state of the switching circuit 344) a temperature value signal measured by the first temperature sensor 341 and/or the second temperature sensor 342 to the temperature control processor 340. The switching circuit 344 may be configured by combining multiple circuit elements on a portion of the substrate part 330 or implemented as a switch IC.

FIG. 6A illustrates the switching circuit 344 including a single pole double throw (SPDT) switch implemented as a relay element, but this is merely an example, and the disclosure may include various switching circuits 344 implemented with transistors (e.g., a MOSFET) or a switch IC, and may include other switching structures such as, for example, a double pole single throw (DPST), a double pole double throw (DPDT), or multiple single pole single throws (SPST) in addition to the SPDT.

In various embodiments, the switching circuit 344 may be operatively connected to the slide sensor 364. For example, the slide sensor 364 may be directly connected to the switching circuit 344 and transfer, to the temperature control processor 340 (e.g., the AP 331a and/or the processor 120), a temperature value signal measured through the first temperature sensor 341 and/or the second temperature sensor 342 depending on a value input from the slide sensor 364. In various embodiments, as shown in FIG. 6A, the slide sensor may be indirectly connected to the switching circuit 334 through the processor (e.g., the AP 331a). By using the slide sensor 364, information on the movement state between the first housing 310 and the second housing 320 may be transferred to the processor, and the processor may control the switching circuit 334 such that a temperature value signal measured through the first temperature sensor 341 and/or the second temperature sensor 342 is transmitted to the temperature control processor 340 (or the AP 331a and/or the processor 120).

In some embodiments, the processor (e.g., the AP 331a) may control movement of the first housing 310 and/or the second housing 320 based on a user input and/or an operation of an application executed in the processor. By way of example, the processor may determine whether to maintain or configure the first and second housings 310 and 320 according to the first state (the first housing 310 is slid into the second housing 320), the second state (the first housing 310 is slid out from the second housing 320), an intermediate state between the first state and the second state. The first and the second housings 310 and 320 may be driven to be in the first state or the second state by the sliding drive device 360. The processor may control, based on the determined state, the switching circuit 344 such that a temperature value signal measured by the first or second temperature sensor 341 or 342 is transmitted to the temperature control processor 340 (or the AP 331a and/or the processor 120).

In various embodiments, a temperature value signal measured by the second temperature sensor 342 may be transmitted to the temperature control processor 340 (or the processor) by the switching circuit 344 in the first state (e.g., the state in which the first housing 310 is slid into the second housing 320), and a temperature value signal measured by the first temperature sensor 341 may be transmitted to the temperature control processor 340 (or the AP 331a and/or the processor 120) by the switching circuit 344 in the second state (e.g., the state in which the first housing 310 is slid out from the second housing 320).

In the first state, a surface temperature of the electronic device 300 felt by the user holding the electronic device 300 may be more affected by a temperature of the second housing 320, and the first temperature sensor 341 may output a higher temperature value than a temperature felt by the user due to proximity of the first temperature sensor 341 to an active element (e.g., the processor) with high heat generation. In some aspects, since the second housing 320 is relatively cooler than the first housing 310 in the first state, in a case in which the first housing 310 is slid into the second housing 320, an actual surface temperature of the electronic device 300 or a temperature felt by the user may have a lower value than a temperature value calculated through the first temperature sensor 341. Accordingly, for example, in a case in which a temperature of the electronic device 300 is calculated through the first temperature sensor 341 in the first state, the temperature higher than the surface temperature of the electronic device felt by the user may be obtained and thus operation performance of the heat source 331 (e.g., the AP 331a) may be excessively limited to reduce a heat generation amount of the heat source 331 (e.g., the AP 331a), which may lead to performance reduction of the electronic device 300.

Furthermore, since the second housing 320 is spaced apart from the heat source 331 like the AP 331a in the second state, the second housing 320 may have a temperature relatively lower than the temperature of the first housing 310. Here, in a case in which a temperature of the electronic device 300 is calculated using the second temperature sensor 342 and without measurement data provided by other sensors (e.g., first temperature sensor 341), a lower value may be calculated compared to the actual surface temperature of the electronic device 300 or the surface temperature of the electronic device 300 felt by the user. Accordingly, the processor may determine to refrain from controlling the heat source 331 in association with reducing the heat generation amount by the heat source 331 (e.g., the AP 331a), and thus the heat generation amount of the heat source 331 may excessively increase and cause discomfort or burns to the user. In some cases, the high generation amount of the heat source 331 may cause damage to or shorten the lifespan of the components of the electronic device 300.

The electronic device according to various embodiments of the disclosure may detect the state (movement state) (e.g., the first state, the second state, or the third state) of the first housing 310 with respect to the second housing 320 and adaptively use the first temperature sensor 341 and/or the second temperature sensor 342 to calculate the temperature of the electronic device 300. The temperature calculation techniques described herein may prevent errors in calculating the surface temperature of the electronic device 300 or the temperature of the electronic device 300 that the user feels when holding the electronic device 300, reduce the risk of discomfort or burns to the user, and prevent errors related to performance control of the electronic device 300.

Referring to FIG. 6B, the temperature control processor 340 (or the AP 331a and/or the processor 120) may perform an operation 401 of receiving at least one of a temperature sensor measurement value from a first temperature sensor (e.g., first temperature sensor 341) and/or a temperature sensor measurement value from a second temperature sensor (e.g., second temperature sensor 342), an operation 402 of calculating a temperature of the electronic device 300 based on the temperature sensor measurement value(s), and an operation 403 of comparing the calculated temperature with a reference value (e.g., an upper limit value and a lower limit value).

Based on the comparison, the temperature control processor 340 (or the AP 331a and/or the processor 120) may perform an operation 404a of reducing a heat generation amount of the heat source 331, an operation 404b of maintaining current operation performance of the heat source 331, or an operation 404c of increasing operation performance of the heat source. The operations may be performed in response to the execution of executable instructions stored in a memory (e.g., the memory 130 in FIG. 1) by a processor (e.g., the processor 120 in FIG. 1, the AP 331a, and/or the temperature control processor 340).

The operation 404a of reducing a heat generation amount may include an operation of limiting operation performance of the heat source 331 and/or an operation of reducing a voltage applied to the heat source. For example, the operation 404a of reducing a heat generation amount may include at least one of an operation of lowering an operation frequency of the AP 331a below a predetermined value, configuring a permissible range of the operation frequency to a lower value, limiting an operation of a portion of a CPU core, moving a computation operation to a lower-power CPU core or cluster, lowering a voltage applied to the AP 331a, and/or an operation of blocking power to a portion of the CPU core. The operation 404c of increasing operation performance of the heat source may include at least one of, for example, operations of configuring a permissible range of the operation frequency of the AP 331a to a higher value, increasing the number of CPU cores allocated to computation, moving a computation operation to a relatively high-performance CPU core or cluster, and/or increasing a voltage applied to the AP 331a.

The operation 401 of receiving a temperature sensor measurement value may include an operation in which the temperature control processor 340 (or the AP 331a and/or the processor 120) reads a temperature value signal measured and output or transmitted by the first temperature sensor 341 through the switching circuit 344 and/or reads a temperature value signal measured and output or transmitted by the second temperature sensor 342, as shown in FIG. 6A. The operation 402 of calculating a temperature of the electronic device 300 may include an operation of calculating a temperature (e.g., a surface temperature and/or a temperature of the electronic device felt by the user) of the electronic device 300 from a temperature value measured by the first temperature sensor 341 and/or the second temperature sensor 342 input by means of the method described herein. In the operation 402 of calculating a temperature of the electronic device 300, the method may include calculating a temperature of the electronic device 300 by considering temperature values input from various temperature sensors 343, such as, for example, the AP temperature sensor 343a, the battery temperature sensor 343b, the wireless charging module temperature sensor 343c, the USB port temperature sensor 343d, the wireless communication module temperature sensor 343e, and/or the power amplifier temperature sensor 343f of the electronic device 300 together, in addition to the first temperature sensor 341 and the second temperature sensor 342. In some additional and/or alternative embodiments, the operation 402 may include calculating the temperature of the electronic device 300 by considering any suitable combination of temperature values input from various temperature sensors 343 (e.g., the AP temperature sensor 343a, the battery temperature sensor 343b, the wireless charging module temperature sensor 343c, the USB port temperature sensor 343d, the wireless communication module temperature sensor 343e, the power amplifier temperature sensor 343f), the first temperature sensor 341, and/or the second temperature sensor 342.

The operation 403 of determining whether a threshold value has been exceeded may include an operation of determining whether a temperature of the electronic device 300 calculated through the operations described herein exceeds a threshold value. The threshold value may be configured in advance, adjusted by a user input, or adjusted according to a usage state of the electronic device 300 (e.g., a load, a type of an operation performed, and the like). Depending on a determination result, the processor(e.g. temperature control processor 340) may perform the operation of reducing a heat generation amount (at operation 404a), the operation of maintaining a heat generation amount (at operation 404b), or the operation of increasing a heat generation amount (at operation 404c).

The temperature control operation 400 described in FIG. 6B has an advantage that the operation of the temperature control processor 340 may be implemented independent of whether the electronic device 300 includes the first and second temperature sensors 341, 342 or a single temperature sensor. Referring to FIG. 6A, whether to select the first temperature sensor 341 or the second temperature sensor 342 may be determined through the switching circuit 344, and by means of the temperature control processor 340 receiving a value of a temperature sensor transferred through the switching circuit 344, the electronic device 300 according to the embodiments as shown in FIGS. 6A and 6B may use a temperature control operation (e.g., an operation implemented by software and/or firmware) and/or a temperature control processor 340 identical to that used for an electronic device (e.g., a bar type electronic device) with another form factor not including a variable housing (e.g., the first housing 310 and the second housing 320). Therefore, development and production costs may be reduced through commonization of components of different electronic devices.

Temperature sensor data used in an example temperature prediction method of an electronic device according to various embodiments of the disclosure are shown in Table 1 below.

**[Table 1]**

| | | |
|---|---|---|
| State | Electronic device front temperature prediction | Electronic device rear temperature prediction |
| First state (slide-in state) | T_AP, T_BAT, T_CHG, T_WIFI, T_USB, T_PA | T_AP, T_BAT, T_CHG, T_WIFI, T_USB, T_PA, T_HOUSING |
| Second state (slide- out state) | T_AP, T_BAT, T_CHG, T_WIFI, T_USB, T_PA | T_AP, T_BAT, T_CHG, T_WIFI, T_USB, T_PA, T_HOUSING |

In Table 1 above, T-AP is an abbreviation for temperature data (e.g., measured temperature) provided by the AP temperature sensor 343a, T_BAT is for temperature data (e.g., measured temperature) provided by the battery temperature sensor 343b, T_CHG is for temperature data (e.g., measured temperature) provided by the wireless charging module temperature sensor 343c, T_USB is for temperature data (e.g., measured temperature) provided by the USB port temperature sensor 343d, T_WIFI is for temperature data (e.g., measured temperature) provided by the wireless communication module temperature sensor 343e, and T_PA is for temperature data (e.g., measured temperature) provided by the power amplifier temperature sensor 343f. T_HOUSING may indicate a value of a temperature sensor connected to the temperature control processor by the switching circuit 344 among the first temperature sensor 341 and the second temperature sensor 342.

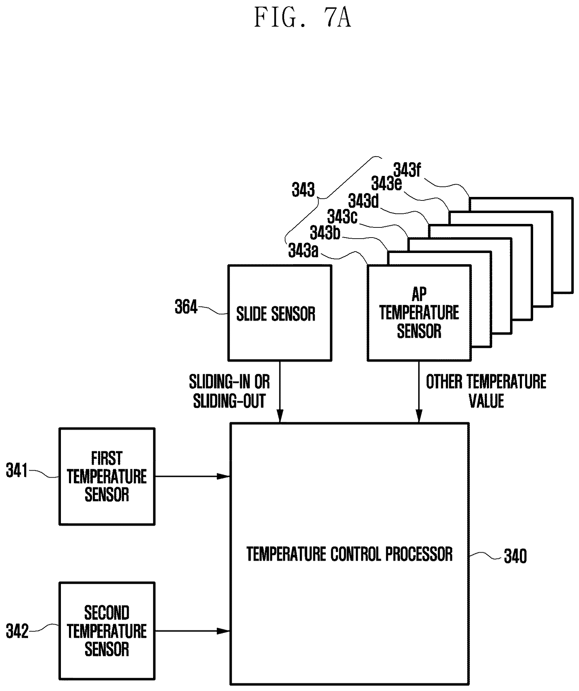

FIG. 7A is a block diagram illustrating an electronic device 300 according to various embodiments.

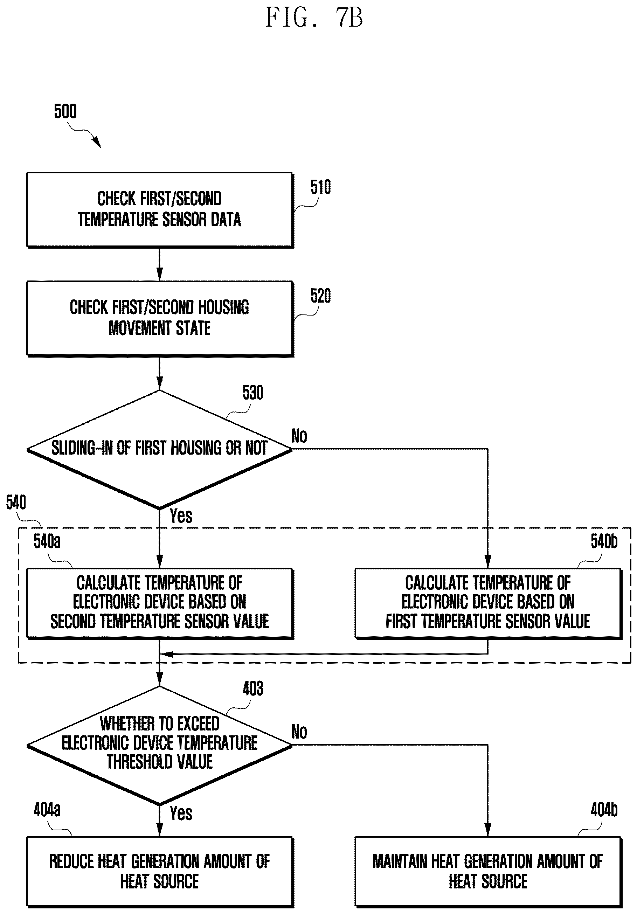

FIG. 7B is a flowchart illustrating a temperature control operation of an electronic device 300 according to various embodiments.

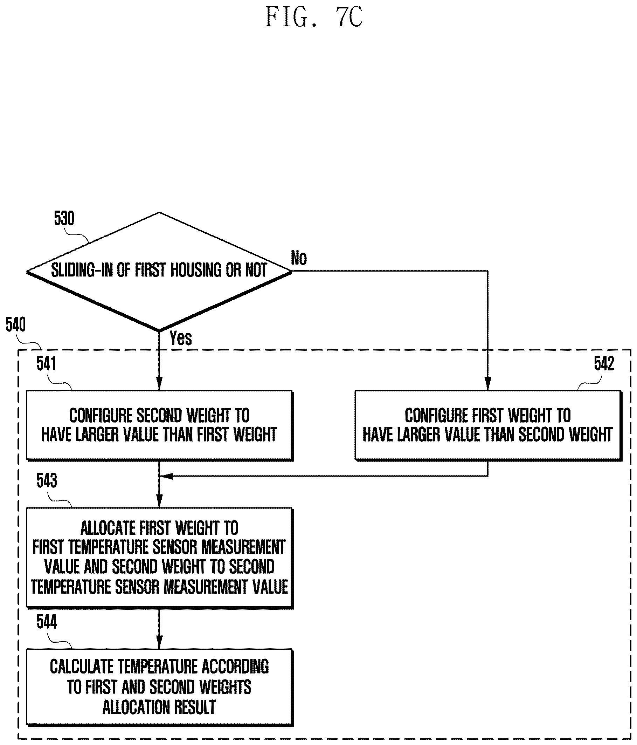

FIG. 7C is a flowchart illustrating a temperature control operation of an electronic device 300 according to various embodiments.

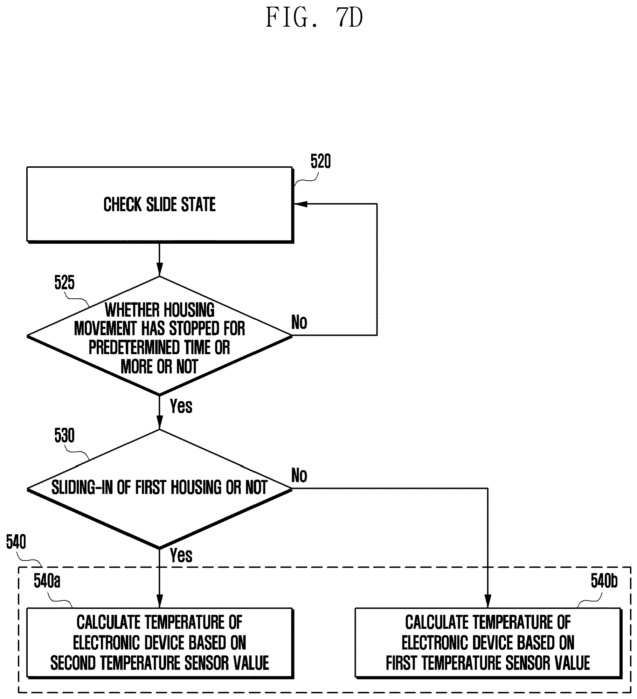

FIG. 7D is a flowchart illustrating a temperature control operation of an electronic device 300 according to various embodiments.

The flowcharts of FIGS. 7C and 7D include aspects of the flowchart of FIG. 7B described herein, and repeated descriptions of like elements are omitted for brevity. Some common components shown in FIG. 7B are omitted from FIGS. 7C and 7D.

Referring to FIG. 7A, the electronic device 300 according to various embodiments may include a temperature control processor 340, a first temperature sensor 341, a second temperature sensor 342, and a slide sensor 364. The first temperature sensor 341, the second temperature sensor 342, and the slide sensor 364 may be operatively connected to the temperature control processor 340. The temperature control processor 340 may be operatively connected to various temperature sensors of the electronic device 300, such as, for example, the AP temperature sensor 343a, the battery temperature sensor 343b, the wireless charging module temperature sensor 343c, the USB port temperature sensor 343d, and/or the wireless communication module temperature sensor 343e in addition to the first temperature sensor 341 and the second temperature sensor 342.

Referring to FIG. 7B, the temperature control processor 340 may include a temperature check operation 510, a housing movement state check operation 520, a housing movement state identification operation 530, and a temperature calculation operation 540. In various embodiments, the temperature check operation 510 may include an operation in which the temperature control processor 340 receives a measured temperature value by using the first temperature sensor 341 and the second temperature sensor 342. In various embodiments, the housing movement state check operation 520 may include an operation of checking a state in which the first housing 310 and the second housing 320 have moved with respect to each other. For example, the temperature control processor 340 may receive, from the slide sensor 364, data on whether the first housing 310 is slid into the second housing 320. In other embodiments, with respect to the housing movement state check operation 520, the movement state check operation 520 is not limited to being performed after the temperature check operation 510 as described with reference to FIG. 7B, and the operations of the operations described herein may be executed in any order.

The housing movement state identification operation 530 may include an operation of identifying whether the first housing 310 is slid in or slid out with respect to the second housing 320 based on data input from the slide sensor 364. The temperature calculation operation 540 may include an operation 540b of calculating a temperature of the electronic device 300 (e.g., a surface temperature of the electronic device 300 and/or a user's perceived temperature) based on a temperature value of the first temperature sensor 341 or an operation 540b of calculating the temperature of the electronic device 300 based on a temperature value of the second temperature sensor 342, based on an identification result of the housing movement state identification operation 530.

In various embodiments, after the temperature calculation operation 540, an operation 403 of checking whether the temperature of the electronic device 300 exceeds a threshold value and an operation 404a of reducing a heat generation amount of the heat source 331 or an operation 404b of maintaining the heat generation amount of the heat source 331 may be performed depending on a checking result. For this, reference may be made to the description of FIG. 6B as long as there is no contradiction.

According to the embodiment described in FIG. 7B, since the electronic device 300 does not include a separate switching circuit 344, and a slide-in check operation corresponds to an operation inside the temperature control processor 340, a circuit configuration of the substrate part 330 may be relatively simple.

Temperature sensor data used in an example temperature prediction of an electronic device according to various embodiments of the disclosure are shown in Table 2 below.

**[Table 2]**

| State | Electronic device front temperature prediction | Electronic device rear temperature prediction |
|---|---|---|
| First state (slide-in state) | T_AP, T_BAT, T_CHG, T_PA, T_WIFI, T_USB | T_AP, T_BAT, T_CHG, T_PA, T_WIFI, T_USB, T_HOUSING2 |
| Second state (slide-out state) | T_AP, T_BAT, T_CHG, T_PA, T_WIFI, T_USB | T_AP, T_BAT, T_CHG, T_PA, T_WIFI, T_USB, T_HOUSING1 |

In Table 1 above, T-AP is an abbreviation for temperature data (e.g., measured temperature) provided by the AP temperature sensor 343a, T_BAT is for temperature data (e.g., measured temperature) provided by the battery temperature sensor 343b, T_CHG is for temperature data (e.g., measured temperature) provided by the wireless charging module temperature sensor 343c, T_USB is for temperature data (e.g., measured temperature) provided by the USB port temperature sensor 343d, T_WIFI is for temperature data (e.g., measured temperature) provided by the wireless communication module temperature sensor 343e, and T_PA is for temperature data (e.g., measured temperature) provided by the power amplifier temperature sensor 343f. T_HOUSING1 may indicate a temperature value measured by the first temperature sensor 341 and T_HOUSING2 may indicate a temperature value measured by the second temperature sensor 342.

Referring to FIG. 7C, the temperature calculation operation 540 may include an operation 541 of configuring a second weight to have a larger value than a first weight (expressed another way, configuring the second weight such that the second weight is larger than the first weight) in a state in which the first housing 310 is slid into the second housing 320. The temperature calculation operation 540 may include an operation 542 of configuring the first weight to have a larger value than the second weight (expressed another way, configuring the first weight such that the first weight is larger than the second weight) in a state in which the first housing 310 is slid out from the second housing 320. The temperature calculation operation 540 may include an operation 543 of allocating the first weight to the temperature value of the first temperature sensor 341 and the second weight to the temperature value of the second temperature sensor 342.

The operation 541 of configuring the first weight to have a larger value than the second weight may include an operation of increasing the first weight and/or reducing the second weight. The operation 542 of configuring the second weight to have a larger value than the first weight may include an operation of increasing the second weight and/or reducing the first weight. As the temperature calculation operation 540 is based not on on/off states but on weights, temperature control as described herein may be performed more flexibly based on the slide-in and slide-out states of the first housing 310 and the second housing 320 and other environmental factors.

Referring to FIG. 7D, the electronic device 300 may include a stand-by operation 525 of determining whether a movement (e.g., a slide in or slide out movement) of the first housing 310 and/or the second housing 320 has stopped for a predetermined amount of time or more. In various embodiments, the predetermined amount of time may be substantially identical to a temperature update period of the temperature control processor 340 and the first temperature sensor 341 and the second temperature sensor 342. In a case in which the housing movement identification operation 530 for selecting the first temperature sensor 341 or the second temperature sensor 342 is performed continuously during a movement operation between the first housing 310 and the second housing 320, a temperature calculation value of the temperature control processor 340 may be instable. Accordingly, the temperature control processor 340 may cause the housing movement identification operation 530 to stand by for a period substantially identical to the temperature update period so as to stabilize an operation of the temperature control processor 340.

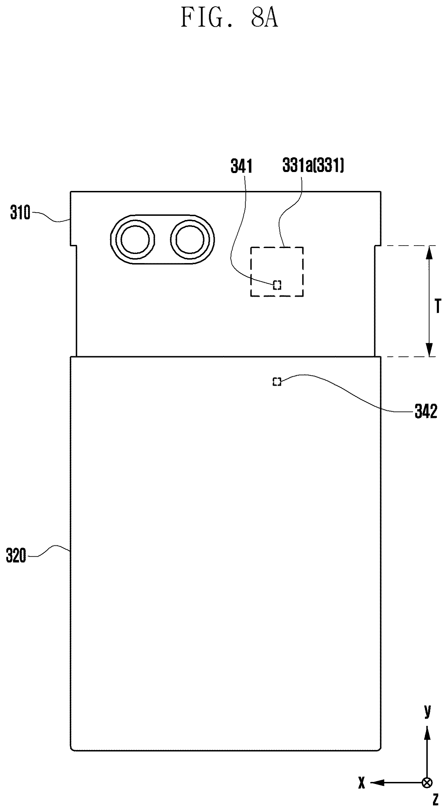

FIG. 8A is a planar view illustrating an electronic device 300 according to various embodiments.

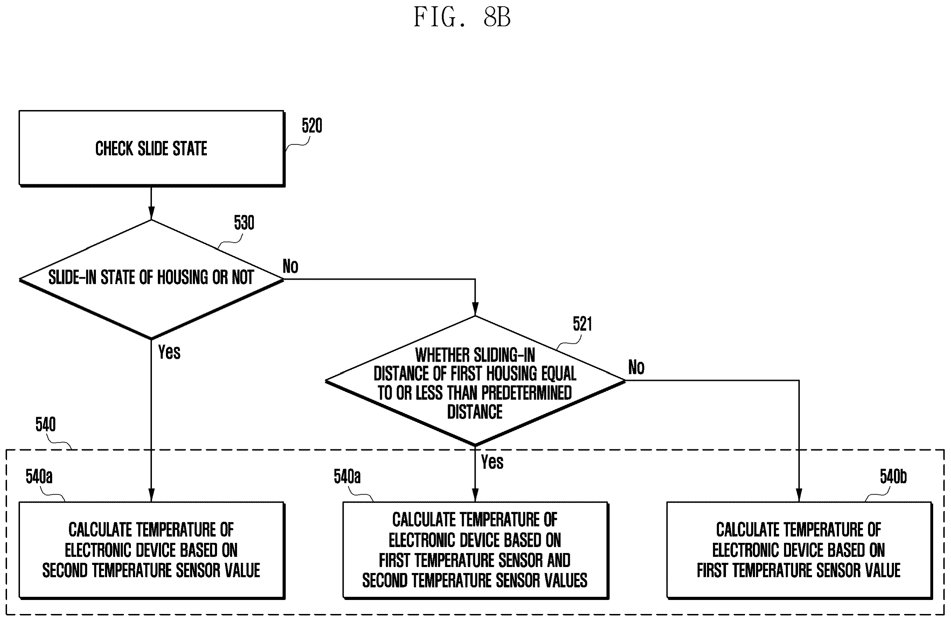

FIG. 8B is a flowchart illustrating a temperature control operation 500 of an electronic device 300 according to various embodiments.

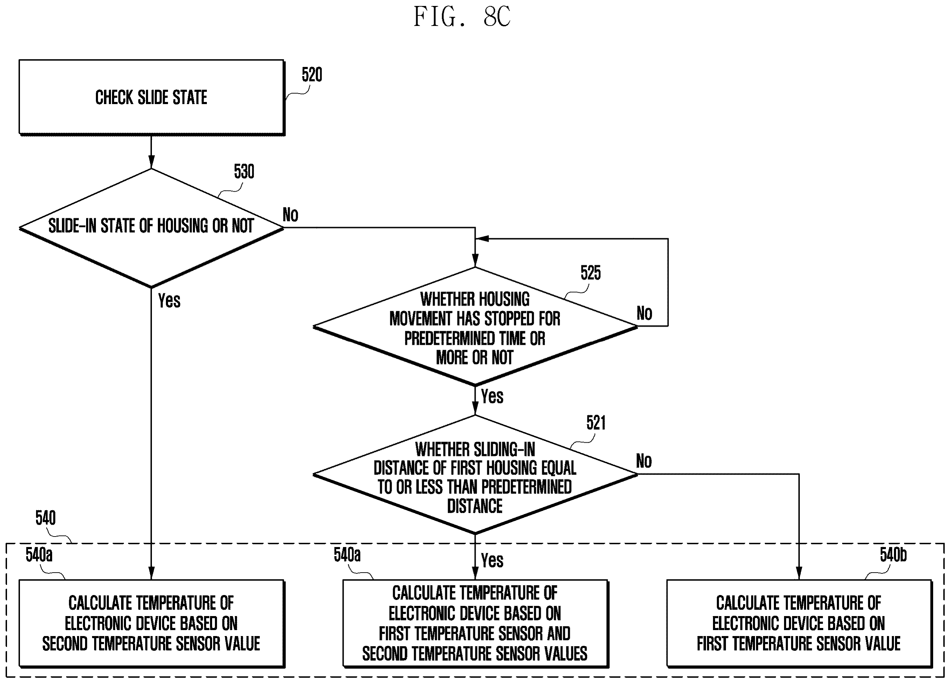

FIG. 8C is a flowchart illustrating a temperature control operation 500 of an electronic device 300 according to various embodiments.

Referring to 8A, the electronic device 300 may be used in a third state corresponding to a state between complete sliding in and complete sliding out of the first housing 310 with respect to the second housing 320. A relative movement distance T between the first housing 310 and the second housing 320 may be measured by the slide sensor 364.

Referring to FIG. 8B, the temperature control operation 500 may include a distance determination operation 521 of determining whether a relative movement distance of the first housing 310 from the second housing 320 is equal to or less than a predetermined distance. In a case in which the relative movement distance of the first housing 310 is determined to be equal to or less than the predetermined distance in the distance determination operation 521, the temperature calculation operation 540 may calculate the temperature of the electronic device 300 by using all of temperature values measured by the first temperature sensor 341 and the second temperature sensor 342. For example, the temperature control processor 340 may use an average value of values of the first temperature sensor 341 and the second temperature sensor 342, or may allocate substantially the same weight to the first temperature sensor 341 and the second temperature sensor 342 (expressed another way, allocate substantially the same weight to temperature values provided by the first temperature sensor 341 and the second temperature sensor 342).

When using the electronic device 300, the temperature felt by the user may be affected by the surface temperature of the electronic device 300 and also by an area of the surface having the corresponding temperature. For example, in a case in which even if the surface temperature is high, the area of the surface having the temperature is of a small area, and the temperature felt by the user may not be high compared to the calculated surface temperature. Accordingly, the temperature control operation 500 according to the disclosure may (e.g., at operation 540a) calculate a temperature by using all of temperature values measured by the first temperature sensor 341 and the second temperature sensor 342 when an area (e.g., the area may be proportional to a relative movement distance between the first housing 310 and the second housing 320) of the first housing 310 having a relative high temperature and exposed to the outside of the second housing 320 satisfies a threshold area value (e.g., distance of the first housing 310 and the second housing 320 is equal to or less than a predetermined movement distance), so as to flexibly control a heat generation amount of the heat source 331 (e.g., the AP 331a) in accordance with the temperature felt by the user.

Referring to FIG. 8C, the electronic device 300 may perform a stand-by operation 525 of determining whether a movement (e.g., a slide in or slide out movement) of the first housing 310 and/or the second housing 320 has stopped for a predetermined amount of time (e.g., the measurement period of the temperature sensor) or more. For example, in a case in which the movement (e.g., the slide-in or slide-out operation) of the first housing 310 and/or the second housing 320 has been stopped for a predetermined amount of time or more, the electronic device may determine (at operation 521) whether a slide-out distance between the first housing and the second housing is equal to or less than a predetermined distance, and calculate (at operation 540a) a temperature by using the first temperature sensor and the second temperature sensor in a case in which the distance is equal to or less than the predetermined distance or calculate (at operation 540b) a temperature of the electronic device by using the first temperature sensor in a case in which the distance is greater than the predetermined distance.

In a case in which the housing movement identification operation 530 for selecting the first temperature sensor 341 or the second temperature sensor 342 is performed continuously during a movement operation between the first housing 310 and the second housing 320, a temperature calculation value of the temperature control processor 340 may be instable, but according to the operations of the disclosure as described herein, by reconfiguring a type of a temperature sensor used for temperature calculation in a case in which the movement of the housings has stopped for a predetermined amount of time or more, the instability in temperature calculation may be reduced.

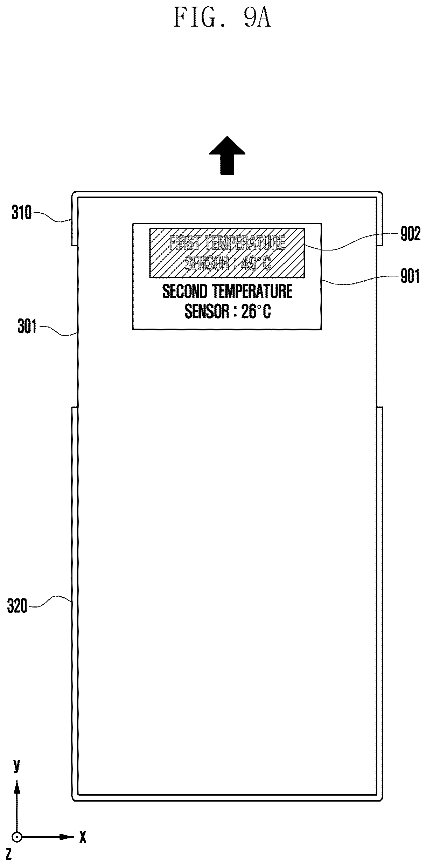

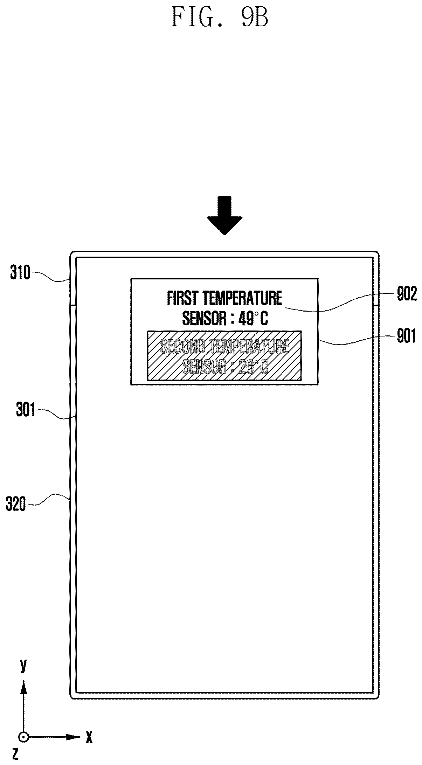

FIGS. 9A and 9B are planar views illustrating an electronic device 300 according to various embodiments of the disclosure.

Referring to FIGS. 9A and 9B, the electronic device 300 may include a display 301 (e.g., the display module 160 in FIG. 1, or the flexible display 230 in FIGS. 2A to 4) configured to display information. The temperature control processor 340 may be configured to display a user interface 901 on the display. The interface 901 may display a temperature value measured by the first temperature sensor 341 and a temperature value measured by the second temperature sensor 342. In various embodiments, the interface 901 may display which of the first temperature sensor 341 and/or the second temperature sensor 342 is used for temperature calculation by the temperature control processor 340. The displaying may include, for example, a highlighting 902 display of the temperature value used in the temperature calculation by the temperature control processor 340, a check box display, and/or a color change in the temperature value text. In some embodiments, the interface 901 may display, on the display, text indicating the sensor(s) (e.g., first temperature sensor 341, second temperature sensor 342, other various temperature sensors 343) used in the temperature calculation. Through the interface 901, the user may more clearly recognize a current state of the temperature control operation 500 of the control processor 340 and may be assisted by the interface 901 in directly configuring various parameters for temperature controlling.

The electronic device 300 according to various embodiments of the disclosure may include a first housing 310, a second housing 320 coupled to the first to be relatively movable with respect to the first housing 310, a first temperature sensor 341 disposed in the first housing, a second temperature sensor 342 disposed in the second housing, at least one processor (e.g., AP 331a or temperature control processor 340), and a memory 130 operatively connected to the at least one processor.

The memory 130 may store executable instructions which, when executed by the at least one processor, cause the electronic device 300 to calculate a temperature of the electronic device 300 based on at least one of measurement data (e.g., temperature data, measured temperature) provided by the first temperature sensor 341 or measurement data provided by the second temperature sensor 342 based on a state of the second housing 320 with respect to the first housing 310.

In various embodiments, the executable instructions may be configured to cause, when executed by the at least one processor 331a or 340, the electronic device 300 to calculate, when in a first state in which a distance between a center of the first housing 310 and a center of the second housing is a smallest distance, a temperature of the electronic device 300 based on the measurement data provided by the first temperature sensor 341 and calculate, when in a second state in which the distance between the center of the first housing 310 and the center of the second housing is a largest distance, a temperature of the electronic device 300 based on the measurement data provided by the second temperature sensor 342.

In various embodiments, the executable instructions may be configured to cause, when executed by the at least one processor, the electronic device 300 to compare the calculated temperature of the electronic device 300 with at least one predetermined reference value and control an operation of the at least one processor 331a or 340 based on a result of the comparison.

In various embodiments, the executable instructions may be configured to cause, when executed by the at least one processor, the electronic device 300 to calculate, when in a third state in which the distance between the center of the first housing 310 and the center of the second housing 320 is greater than the distance in the first state and smaller than the distance in the second state, a temperature of the electronic device 300 based on the measurement data provided by the first temperature sensor 341 and the measurement data provided by the second temperature sensor 342.

In various embodiments, a slide sensor 364 operatively connected to the at least one processor 331a or 340 and configured to measure a relative movement distance between the first housing 310 and the second housing 320 may be further included, and the executable instructions may be configured to cause, when executed by the at least one processor, the electronic device 300 to calculate, in a case in which the relative movement distance between the first housing 310 and the second housing 320 measured through the slide sensor 364 is equal to or less than a predetermined distance, a temperature of the electronic device 300 based on a temperature value measured through the first temperature sensor 341 and a temperature value measured through the second temperature sensor 342.

In various embodiments, the executable instructions may be configured to cause, when executed by the at least one processor, the electronic device 300 to determine whether there is no movement of the second housing 320 with respect to the first housing 310 for a predetermined amount of time and calculate the temperature of the electronic device 300 according to the relative movement distance between the first housing 310 and the second housing after the predetermined amount of time has elapsed.

In various embodiments, a switching circuit operatively connected to the at least one processor 331a or 340, the first temperature sensor 341, and the second temperature sensor 342 and configured to selectively connect each of the first temperature sensor 341 and the second temperature sensor 342 to the at least one processor 331a or 340 may be included, and the executable instructions may be configured to cause, when executed by the at least one processor, the electronic device 300 to control the switching circuit to connect a temperature sensor selected from the first temperature sensor 341 and the second temperature sensor 342 to the at least one processor 331a or 340 through the switching circuit and calculate a temperature of the electronic device 300 based on temperature data (e.g., measured temperature) provided by the selected temperature sensor.

In various embodiments, the electronic device 300 may include a substrate part 330 disposed in the first housing and have the at least one processor 331a or 340 disposed on a surface of the substrate part 330, and the first temperature sensor 341 may be disposed on another surface of the substrate part 330 such that the first temperature sensor 341 at least partially overlaps the at least one processor 331a or 340. In some aspects, the surface of the substrate part 330 and the other surface of the substrate part 330 may face each other.

In various embodiments, the second temperature sensor 342 may be disposed at a position such that the second temperature sensor 342 at least partially overlaps the at least one processor in the first state and is spaced apart from the at least one processor in the second state.

In various embodiments, the executable instructions may be configured to cause, when executed by the at least one processor, the electronic device 300 to allocate a first weight to a measurement value of the first temperature sensor 341 and a second weight to a measurement value of the second temperature sensor 342, configure the first weight and the second weight such that the first weight is smaller than the second weight in the first state, configure the first weight and the second weight such that the first weight is greater than the second weight in the second state, and calculate the temperature of the electronic device 300 based on the first weight and the second weight.

In various embodiments, the executable instructions may be configured to cause, when executed by the at least one processor, the electronic device 300 to update the calculated temperature based on a predetermined period and calculate a temperature of the electronic device 300 based on determining a relative movement of the second housing 320 with respect to the first housing 310 is stopped for a period of time equal to or greater than the predetermined period.

In various embodiments, the electronic device 300 may further include a display 301 configured to display information, and the executable instructions may be configured to cause, when executed by the at least one processor, the electronic device 300 to display, on the display 301, information on the temperature calculated based on a temperature value measured by at least one of the first temperature sensor 341 and the second temperature sensor 342 based on a movement state of the second housing 320 with respect to the first housing 310.

In various embodiments, at least one of the first temperature sensor 341 or the second temperature sensor 342 may include a thermistor.

A method according to various embodiments of the disclosure may correspond to a temperature control operation 500 (also referred to herein as a method) of an electronic device 300. The electronic device 300 may include a first housing 310, a second housing 320 movable with respect to the first housing 310, a first temperature sensor 341 disposed in the first housing 310, a second temperature sensor 342 disposed in the second housing 320, and at least one processor 331a or 340 performing the method. The method (temperature control operation 500) may include a housing movement state identification operation 530 in which the at least one processor 331a or 340 identifies a relative movement distance of the first housing 310 with respect to the second housing 320, and an operation in which the at least one processor 331a or 340 calculates, when in a first state in which a distance between a center of the first housing 310 and a center of the second housing 320 is a smallest value, a temperature of the electronic device 300 based on measurement data provided by the first temperature sensor 341 and the at least one processor 331a or 340 calculates, when the electronic device 300 is in a second state in which the distance between the center of the first housing 310 and the center of the second housing 320 is a largest value, the temperature based on measurement data provided by the second temperature sensor 342.

In various embodiments, the method may include an operation of configuring, in the first state, a first weight for the first temperature sensor 341 and a second weight higher than the first weight for the second temperature sensor 342, and an operation of configuring, in the second state, a first weight for the first temperature sensor 341 and a second weight lower than the first weight for the second temperature sensor 342.

In various embodiments, the electronic device 300 may include a slide sensor 364 configured to measure a relative movement distance of the second housing 320 with respect to the first housing 310. The method may include a distance determination operation 521 of determining whether the relative movement distance measured through the slide sensor 364 is equal to or less than a predetermined distance in a third state, where the predetermined distance in the third state is a distance between the center of the first housing 310 and the center of the second housing 320 and is between the distance in the first state and the distance in the second state. The method may include, in a case in which the relative movement distance is equal to or less than the predetermined distance, calculating a temperature of the electronic device 300 based on a temperature value measured through the first temperature sensor 341 and a temperature value measured through the second temperature sensor 342.

In various embodiments, the method may include a stand-by operation 525 in which the at least one processor 331a or 340 determines whether there is no movement of the second housing 320 with respect to the first housing 310 for a predetermined amount of time and causes the distance determination operation 521 to be performed after the predetermined amount of time has elapsed.

In various embodiments, the method may include updating, by the at least one processor 331a or 340, the calculated temperature based on a predetermined period, and the predetermined amount of time may be identical to the predetermined period.

In various embodiments, the electronic device 300 may further include a display 301 configured to display information. The method (temperature calculation method) may include an operation of displaying an interface 901 on the display 301. The method may include an operation of displaying, on the display 301, information on the temperature calculated based on a temperature value measured by at least one of the first temperature sensor 341 and the second temperature sensor 342 based on a movement state of the second housing 320 with respect to the first housing 310.

The embodiments disclosed in the specification and the drawings are merely presented as specific examples to easily explain the technical features according to the embodiments of the disclosure and help understanding of the embodiments of the disclosure and are not intended to limit the scope of the embodiments of the disclosure. Therefore, the scope of the various embodiments disclosed herein should be construed as encompassing all changes or modifications derived from the technical ideas of the various embodiments disclosed herein in addition to the embodiments disclosed herein.

## Claims

1. An electronic device (300) comprising:
a first housing (310);
a second housing (320) coupled to the first housing and relatively movable with respect to the first housing (310);
a first temperature sensor (341) disposed in the first housing;
a second temperature sensor (342) disposed in the second housing;
at least one processor (331a, 340); and
a memory (130) operatively connected to the at least one processor,
wherein the memory (130) is configured to store executable instructions which, when executed by the at least one processor, cause the electronic device (300) to calculate a temperature of the electronic device (300) based on at least one of measurement data provided by the first temperature sensor (341) or measurement data provided by the second temperature sensor (342) , based on a state of the second housing (320) with respect to the first housing (310).

2. The electronic device of claim 1, wherein the executable instructions are configured to cause, when executed by the at least one processor (331a, 340), the electronic device (300) to:
calculate, when in a first state in which a distance between a center of the first housing (310) and a center of the second housing is a smallest distance, the temperature of the electronic device (300) based on the measurement data provided by the first temperature sensor (341); and
calculate, when in a second state in which the distance between the center of the first housing (310) and the center of the second housing is a largest distance, a temperature of the electronic device (300) based on the measurement data provided by the second temperature

3. The electronic device of claim 2, wherein the executable instructions are configured to cause, when executed by the at least one processor, the electronic device (300) to compare the calculated temperature of the electronic device (300) with at least one predetermined reference value and control an operation of the at least one processor (331a, 340) based on a result of the comparison.

4. The electronic device of claim 2, wherein the executable instructions are configured to cause, when executed by the at least one processor, the electronic device (300) to calculate, when in a third state in which the distance between the center of the first housing (310) and the center of the second housing (320) is greater than the distance in the first state and smaller than the distance in the second state, a temperature of the electronic device (300) based on the measurement data provided by the first temperature sensor (341) and the measurement data provided by the second temperature sensor (342).

5. The electronic device of claim 4, further comprising a slide sensor (364) operatively connected to the at least one processor (331a, 340) and configured to measure a relative movement distance between the first housing (310) and the second housing (320),
wherein the executable instructions are configured to cause, when executed by the at least one processor, the electronic device (300) to calculate, in case in which the relative movement distance between the first housing (310) and the second housing (320) measured through the slide sensor (364) is equal to or less than a predetermined distance, the temperature of the electronic device (300) based on the measurement data provided by the first temperature sensor (341) and the measurement data provided by the second temperature sensor (342).

6. The electronic device of claim 5, wherein the executable instructions are configured to cause, when executed by the at least one processor, the electronic device (300) to determine whether there is no movement of the second housing (320) with respect to the first housing (310) for a predetermined amount of time; and
calculate the temperature of the electronic device (300) based on the relative movement distance between the first housing (310) and the second housing after the predetermined amount of time has elapsed.

7. The electronic device of claim 2, further comprising a switching circuit operatively connected to the at least one processor (331a, 340), the first temperature sensor (341), and the second temperature sensor (342) and configured to selectively connect each of the first temperature sensor (341) and the second temperature sensor (342) to the at least one processor (331a, 340),
wherein the executable instructions are configured to cause, when executed by the at least one processor, the electronic device (300) to:
control the switching circuit to connect a temperature sensor selected from among the first temperature sensor(341) and the second temperature sensor (342) to the at least one processor (331a, 340) through the switching circuit; and
calculate a temperature of the electronic device (300) based on the measurement data provided by the selected temperature sensor.

8. The electronic device of claim 1, further comprising a substrate part (330) disposed in the first housing and having the at least one processor (331a, 340) disposed on a surface of the substrate part (330),
wherein the first temperature sensor (341) is disposed on another surface of the substrate part (330) such that the first temperature sensor (341) at least partially overlaps the at least one processor (331a, 340), and the surface of the substrate part and the other surface of the substrate part (330) face each other, and
wherein the second temperature sensor (342) is disposed at a position such that the second temperature sensor(342):
at least partially overlaps the at least one processor in the first state; and
is spaced apart from the at least one processor in the second state.

9. The electronic device of claim 2, wherein the executable instructions are configured to cause, when executed by the at least one processor, the electronic device to:
allocate a first weight to the measurement data provided by the first temperature sensor (341) and a second weight to the measurement data provided by the second temperature sensor (342) s;
configure the first weight and the second weight such that the first weight is smaller than the second weight in the first state;
configure the first weight and the second weight such that the first weight is greater than the second weight in the second state; and
calculate the temperature of the electronic device (300) based on the first weight and the second weight.

10. The electronic device of claim 1, wherein the executable instructions are configured to cause, when executed by the at least one processor, the electronic device (300) to:
update the calculated temperature based on a predetermined period; and
calculate the temperature of the electronic device (300) based on determining a relative movement of the second housing (320) with respect to the first housing (310) is stopped for a period of time equal to or greater than the predetermined period.

11. The electronic device of claim 2, further comprising a display (301) configured to display information,
wherein the executable instructions are configured to cause, when executed by the at least one processor, the electronic device (300) to display, on the display (301), information on the temperature calculated based on measurement data provided by at least one of the first temperature sensor (341) and the second temperature sensor (342) based on the state of the second housing (320) with respect to the first housing (310).

12. A method of calculating a temperature of an electronic device (300),
wherein the electronic device (300) comprises:
a first housing (310),
a second housing (320) movable with respect to the first housing (310),
a first temperature sensor (341) disposed in the first housing (310),
a second temperature sensor (342) disposed in the second housing (320), and
at least one processor (331a, 340) performing the method, and
wherein the method comprises:
a housing movement state identification operation (530) in which the at least one processor (331a, 340) identifies a relative movement distance of the first housing (310) with respect to the second housing (320);
calculating, when the electronic device (300) is in a first state in which a distance between a center of the first housing (310) and a center of the second housing (320) is a smallest value, a temperature of the electronic device (300) based on measurement data provided by the first temperature sensor (341); and
calculating, when the electronic device is in a second state in which the distance between the center of the first housing (310) and the center of the second housing (320) is a largest value, the temperature based on measurement data provided by the second temperature sensor (342).

13. The method of claim 12, comprising configuring, in the first state, a first weight for the first temperature sensor (341) and a second weight higher than the first weight for the second temperature sensor (342), and configuring, in the second state, a first weight for the first temperature sensor (341) and a second weight lower than the first weight for the second temperature sensor (342).

14. The method of claim 12, wherein the electronic device (300) comprises a slide sensor (364) configured to measure a relative movement distance of the second housing (320) with respect to the first housing (310),
wherein the method comprises a determining whether the relative movement distance measured through the slide sensor (364) is equal to or less than a predetermined distance in a third state, wherein the predetermined distance in the third state is a distance between the center of the first housing (310) and the center of the second housing (320) is between the distance in the first state and the distance in the second state, and
wherein the method comprises, in a case in which the relative movement distance is equal to or less than the predetermined distance, calculating the temperature of the electronic device (300) based on the measurement value provided by the first temperature sensor (341) and the measurement value provided by the second temperature sensor (342).

15. The method of claim 12, further comprising:
determining, by the at least one processor, whether there is no movement of the second housing (320) with respect to the first housing (310) for a predetermined amount of time, and in case in which there is no movement, performing the determining whether the relative movement distance measured through the slide sensor (364) is equal to or less than a predetermined distance after the predetermined amount of time has elapsed,
updating, by the at least one processor (331a, 340) is configured to update the calculated temperature based on a predetermined period, and
wherein the predetermined amount of time is identical to the predetermined period.
